# EUROPEAN PATENT APPLICATION

(11) **EP 4 642 135 A1**
(43) Date of publication of application: **29.10.2025**
(21) Application number: 23931776.1
(22) Date of filing: 08.11.2023
(51) Int. Cl.: H04W 72/232

(54) **COMMUNICATION METHOD AND RELATED DEVICE**

(30) Priority: 04.04.2023 CN 202310396775
(71) Applicant: Honor Device Co., Ltd., Shenzhen, Guangdong 518040 (CN)
(72) Inventor: ZHANG, Jian, Shenzhen, Guangdong 518040 (CN)
(74) Representative: Isarpatent
(86) International application number: PCT/CN2023/130404
(87) International publication number: WO 2024/207729

(57) **Abstract**

Embodiments of this application provide a communication method and a related device. The method includes: determining, by the UE, related information of N CGs within one data transmission period configured for the UE, where the related information of the N CGs includes start times respectively corresponding to the N CGs and radio resources respectively corresponding to the N CGs, and N is a positive integer; and transmitting notification information based on the related information of the N CGs, wherein the notification information is used to notify the network element that a target CG among the N CGs within one data transmission period comprised in a target CG configuration is not used by the UE, or the notification information is used to notify the network element to increase a quantity of CGs within one data transmission period comprised in the target CG configuration. In this way, the network element can learn a use demand of the UE for CGs from the notification information, which helps the network element properly manage resources subsequently based on the notification information, for example, schedule radio resources or increase radio resources for the UE, that is, improve rationality of configuring CGs for the UE.

## Description

This application claims priority to Chinese Patent Application No. 202310396775.4, filed with the China National Intellectual Property Administration on April 4, 2023 and entitled "COMMUNICATION METHOD AND RELATED DEVICE", which is incorporated herein by reference in its entirety.

### TECHNICAL FIELD

This application relates to the field of communication technologies, and in particular, to a communication method and a related device.

### BACKGROUND

Extended reality (extended reality, XR), which integrates a plurality of technologies such as augmented reality (augmented reality, AR), virtual reality (virtual reality, VR), and mixed reality (mixed reality, MR), refers to fusing virtual content and real scenes to create a human-computer interaction virtual environment by using a combination of hardware devices and a plurality of technical means. Since communication frames in an XR service scenario are periodic, a network element (such as a base station) may configure, through semi-persistent scheduling (semi-persistent scheduling, SPS) or another method, a radio resource for use by a UE in each data transmission period, so that the (user equipment, UE) performs data communication with the network element in each data transmission period based on the configured radio resource, so as to realize support for the UE to transmit the communication frames in the XR service scenario to the network element.

However, in the current resource configuration manner, a problem of improper resource allocation easily occurs. For example, a waste of radio resources is generated as a result of the network element allocating excessive radio resources, or the radio resource allocated to the UE is insufficient.

### SUMMARY

This application provides a communication method and a related device, to improve rationality of configuring radio resources for a UE by a network element.

In order to achieve the purpose, this application provides the following technical solutions:
A first aspect of this application provides a communication method, which is applied to a user equipment UE, and includes: determining related information of N configured grants CGs within one data transmission period configured for the UE, where the related information of the N CGs includes time periods respectively corresponding to the N CGs and radio resources respectively corresponding to the activated N CGs, and N is a positive integer; and transmitting notification information based on the related information of the N CGs, where the notification information is used to notify the network element that a target CG among the N CGs within one data transmission period included in a target CG configuration is not used by the UE, or the notification information is used to notify the network element to increase a quantity of CGs within one data transmission period included in the target CG configuration.

The notification information transmitted by the UE to the network element based on the current CG configuration can indicate a current use demand of the UE for CGs, which helps improve rationality of configuring CGs for the UE by the network element based on the notification information. For example, after the network element subsequently properly adjusts the quantity of CGs configured for the UE and start times thereof, the UE may transmit, based on the configured CGs, all data to be transmitted within a current data transmission period to the network element. In this way, a demand of the UE for radio resources during the data transmission is satisfied, while a resource waste as a result of radio resources corresponding to some CGs being left idle within the current data transmission period is avoided. In this way, communication frames in an XR service scenario can be normally exchanged between the network element and the UE, and the rationality of configuring radio resources for the UE by the network element is improved.

In a possible implementation, the UE may receive a control message, where the control message is used to adjust the N CGs within one data transmission period included in the target CG configuration to M CGs, and M is a positive integer different from N; and perform, based on start times respectively corresponding to the M CGs, data exchange by using radio resources respectively corresponding to the M CGs. Since the UE can transmit, in time periods corresponding to the M CGs, all of the data to be transmitted within the current data transmission period to the network element, the demand of the UE for radio resources during the data transmission is satisfied, while a resource waste as a result of radio resources corresponding to some CGs being left idle within the current data transmission period is avoided. In this way, the communication frames in the XR service scenario (or communication frames in another scenario) can be normally exchanged between the network element and the UE, and the rationality of configuring radio resources for the UE by the network element is improved.

In a possible implementation, the notification information includes a bit field, and a value of the bit field is used to indicate that the target CGs among the N CGs within one data transmission period included in the target CG configuration are not used by the UE, or the value of the bit field is used to instruct the network element to increase the quantity of CGs within one data transmission period included in the target CG configuration. In this way, the UE may notify the network element that a part of the CGs is canceled from use or that the UE requests to increase CGs by defining a bit field in the notification information.

In a possible implementation, the notification information is used to notify the network element that the target CGs among the N CGs within one data transmission period included in the target CG configuration are not used by the UE, the notification information includes a cancel operation and an identifier of the target CG, the cancel operation is used to indicate that the UE cancels use of the CG, and the identifier is used to indicate the target CG canceled from use by the UE. In this way, the UE may notify, based on an actual demand, the network element that the UE cancels use of some configured CGs, so that the network element may manage and schedule the radio resources to reduce a resource waste.

In a possible implementation, the notification information includes a bitmap, and a value of the bitmap is used to indicate the target CG canceled from use by the UE. A bitmap may be defined in the notification information to notify the network element of CGs that are canceled from use by the UE.

In a possible implementation, the notification information includes a bitmap, when a value of a first-part bit in the bitmap is a first value, the first-part bit is used to indicate the cancel operation, and a value of a second-part bit in the bitmap is used to indicate the target CG canceled from use by the UE. A bitmap may be defined in the notification information to notify the network element that the UE cancels use of CGs and indicate specific CGs that are canceled.

In a possible implementation, when the value of the first-part bit in the bitmap is a second value, the first-part bit is used to indicate an increase operation, the increase operation is used to instruct to increase CGs within one data transmission period included in the target CG configuration, and the value of the second-part bit in the bitmap is used to indicate a quantity of added CGs. In this way, a bitmap may be defined in the notification information, to notify the network element that the UE requests to increase CGs and indicate a specific quantity of CGs to be added.

In a possible implementation, the notification information includes a quantity M, M is used to indicate the quantity of CGs within one data transmission period included in the target CG configuration, and M is a positive integer. In this way, the network element may compare M with the quantity N of configured CGs to determine whether the UE notifies that use of a part of the CGs is canceled or notifies to increase the quantity of CGs.

In a possible embodiment, the notification information includes a target field, and the target field is used to identify the target CG configuration. A target field may be defined in the notification information to indicate a CG configuration for which a quantity of CGs in a data transmission period included therein is to be adjusted.

In a possible embodiment, the UE transmits the notification information based on a first CG, and the target CG configuration is a CG configuration in which the first CG is located. In this way, the network element may determine, based on a CG configuration to which the CG used by the UE to transmit the notification information belongs, to adjust a quantity of CGs within a data transmission period included in the CG configuration.

In a possible embodiment, the notification information is used to notify the network element to increase the quantity of CGs within one data transmission period included in the target CG configuration. The method further includes: receiving a downlink control information DCI message, where the DCI message is used to configure a dynamic grant DG within the data transmission period, and a data transmission amount of the UE supported by the DG matches a data transmission amount of the UE supported by a quantity of CGs to be added as indicated by the notification information; and performing, based on start times respectively corresponding to the N CGs and a start time of the DG, data exchange by using radio resources respectively corresponding to the N CGs and a radio resource of the DG. In this way, the network element may satisfy the use demand of the UE for radio resources through dynamic allocation of DGs, thereby improving the rationality and flexibility of scheduling resources by the network element.

In a possible implementation, the notification information is used to instruct the network element to adjust a quantity of CGs within one data transmission period included in each of a plurality of CG configurations, and the plurality of CG configurations include the target CG configuration. Quantities of CGs configured within one data transmission period included in different CG configurations may be the same or may be different, thereby achieving more flexible configuration of the quantity of CGs for the UE.

In a possible implementation, the notification information includes a bit field or a bitmap, and a value of the bit field or a value of the bitmap is used to instruct the network element to adjust the quantity of CGs within one data transmission period included in each of the plurality of CG configurations. A bit field or a bitmap may be in the notification information to notify the network element to adjust the quantity of CGs within one data transmission period included in each of the plurality of CG configurations.

In a possible implementation, a first field in the bit field or the bitmap is used to identify each CG configuration among the plurality of CG configurations, and a second field in the bit field or the bitmap is used to indicate the quantity of CGs within one data transmission period included in each of the plurality of CG configurations. In this way, a CG configuration to be processed and adjustment of a quantity of CGs within one data transmission period included in the CG configuration may be indicated through the bit field or the bitmap in the notification information.

In a possible implementation, the notification information includes an identifier of a target CG group, the target CG group is a CG group among a plurality of CG groups, each CG group among the plurality of CG groups includes the plurality of CG configurations, and the notification information is used to notify the network element to configure the quantity of CGs within one data transmission period included in each of the plurality of CG configurations based on the target CG group. In this way, a CG group for the network element to configure the quantity of CGs within one data transmission period included in each of the plurality of CG configurations may be notified through the identifier of the target CG group.

In a possible implementation, the notification information is used to notify the network element that the target CG among the N CGs within one data transmission period included in the target CG configuration is not used by the UE. The transmitting notification information includes: transmitting the notification information at a target time, where the target time is any time within a time period corresponding to the first CG among the N CGs; or the target time is any time within a time period corresponding to m CGs before the first CG among the target CG, and m is a positive integer greater than or equal to 1; or a time interval between the target time and a start time of the first CG among the target CG is greater than a preset duration. Before an N^{th} CG is used, communication information may be transmitted to the network element in advance, so that the network element can have sufficient time to schedule a radio resource of the target CG, or have sufficient data to configure new radio resources for the UE.

In a possible implementation, transmitting notification information includes: transmitting uplink control information UCI, where the UCI includes the notification information; or transmitting a media access control layer control element MAC-CE message, where the MAC-CE message includes the notification information; or transmitting user equipment assistance information UAI, where the UAI includes the notification information. In this way, the UE may instruct the network element to perform corresponding CG configuration adjustment for the UE through the UCI message, the MAC-CE message, or the UAI message.

A second aspect of this application provides a communication method, which is applied to a user equipment UE, and includes: generating notification information, where the notification information is used to indicate that L CGs are configured for the UE within one data transmission period, and L is a positive integer; and transmitting the notification information.

Since the UE can transmit, in time periods corresponding to the L CGs, all data to be transmitted within a current data transmission period to a network element, a demand of the UE for radio resources during the data transmission is satisfied, while a resource waste as a result of radio resources corresponding to some CGs being left idle within the current data transmission period is avoided. In this way, communication frames in an XR service scenario (or communication frames in another scenario) can be normally exchanged between the network element and the UE, and rationality of configuring radio resources for the UE by the network element is improved.

In a possible implementation, a first control message transmitted by the network element is received, where the first control message is used to configure a data transmission period and radio resources for the UE; at least one second control message transmitted by the network element is received, where the second control message is used to activate radio resources respectively corresponding to the L CGs within one data transmission period configured for the UE; and data exchange is performed with the network element by using the radio resources corresponding to the L CGs during the time periods corresponding to the L CGs. In this way, the UE can perform data exchange with the network element based on the requested L CGs, which not only satisfies a demand of the UE for radio resources during the data transmission, but also avoids a situation in which radio resources corresponding to some CGs are left idle within the current data transmission period.

In a possible implementation, the notification information is used to notify the network element to configure a quantity of CGs for the UE within one data transmission period included in each of a plurality of CG configurations, where the plurality of CG configurations include a target CG configuration. Quantities of CGs configured within one data transmission period included in different CG configurations may be the same or may be different, to achieve more flexible CG configuration for the UE.

In a possible implementation, the notification information includes an identifier of a target CG group, the target CG group is a CG group among a plurality of CG groups, each CG group among the plurality of CG groups includes a plurality of CG configurations, and the plurality of CG configurations include the target CG configuration; and the notification information is used to notify the network element to configure the quantity of CGs within one data transmission period included in each of the plurality of CG configurations based on the target CG group. In this way, a CG group for the network element to configure the quantity of CGs within one data transmission period included in each of the plurality of CG configurations may be notified through the identifier of the target CG group.

In a possible implementation, transmitting notification information includes: transmitting user equipment assistance information UAI, where the UAI includes the notification information.

A third aspect of this application provides a communication method. Notification information is received, where the notification information is used to notify the network element that a target CG among a plurality of CGs within one data transmission period included in a target CG configuration is not used by a user equipment UE, or the communication message is used to notify the network element to increase a quantity of CGs within one data transmission period included in the target CG configuration; and a radio resource of the target CG is managed based on the notification information, or a resource is configured for the UE based on the notification information. The notification information transmitted by the UE to the network element based on the current CG configuration can indicate a current use demand of the UE for CGs, so that the network element can perform more proper resource management based on the notification information.

In a possible implementation, that a resource is configured for the UE based on the notification information includes: transmitting a control message, where the control message is used to adjust N CGs within one data transmission period included in the target CG configuration to M CGs, N is a positive integer, and M is a positive integer different from N. In this way, the network element can configure an appropriate quantity of CGs for the UE based on the notification information of the UE, thereby reducing a problem of a resource waste while satisfying the use demand of the UE for radio resources.

In a possible implementation, that a resource is configured for the UE based on the notification information includes: dynamically scheduling the radio resource of the target CG to other UEs. In this way, the network element may dynamically allocate radio resources temporarily not used by the UE to other UEs, thereby increasing a quantity of UEs the network element can serve, while avoiding a waste of radio resources.

In a possible implementation, the communication message is used to notify the network element to increase the quantity of CGs within one data transmission period included in the target CG configuration. The configuring a resource for the UE based on the notification information includes: transmitting a downlink control information DCI message, where the DCI message is used to configure a dynamic grant DG within the data transmission period, and a data transmission amount of the UE supported by the DG matches a data transmission amount of the UE supported by a quantity of CGs to be added as indicated by the notification information. In this way, the network element can satisfy the demand of the UE for radio resources through the dynamic resource scheduling.

A fourth aspect of this application provides a communication method. Notification information is received, where the notification information is used to notify a network element to configure L CGs for a user equipment UE within one data transmission period included in a target configured grant CG configuration, and L is a positive integer; a first control message is transmitted, where the first control message is used to configure a data transmission period of the UE; at least one second control message is transmitted, where the at least one second control message is used to activate the L CGs within one data transmission period included in the target CG configuration; and data transmitted based on start times respectively corresponding to the L CGs by using radio resources respectively corresponding to the L CGs.

The communication method provided in the fourth aspect corresponds to the communication method provided in the second aspect. Therefore, for technical effects of the implementation of the fourth aspect, refer to the technical effects of the second aspect.

A fifth aspect of this application provides a UE. The UE includes: a determining module, configured to determine related information of N configured grants CGs within one data transmission period configured for the UE, where the related information of the N CGs includes start times respectively corresponding to the N CGs and radio resources respectively corresponding to the N CGs, and N is a positive integer; and a transmission module, configured to transmit notification information based on the related information of the N CGs, where the notification information is used to notify the network element that a target CG among the N CGs within one data transmission period included in a target CG configuration is not used by the UE, or the communication message is used to notify the network element to increase a quantity of CGs within one data transmission period included in the target CG configuration.

In a possible implementation, the UE further includes: a receiving module, configured to receive a control message, where the control message is used to adjust the N CGs within one data transmission period included in the target CG configuration to M CGs, and M is a positive integer different from N. The transmission module is further configured to perform, based on start times respectively corresponding to the M CGs, data exchange by using radio resources respectively corresponding to the M CGs.

In a possible implementation, the notification information includes a bit field, and a value of the bit field is used to indicate that the target CGs among the N CGs within one data transmission period included in the target CG configuration are not used by the UE, or the value of the bit field is used to instruct the network element to increase the quantity of CGs within one data transmission period included in the target CG configuration.

In a possible implementation, the notification information is used to notify the network element that the target CGs among the N CGs within one data transmission period included in the target CG configuration are not used by the UE, the notification information includes a cancel operation and an identifier of the target CG, the cancel operation is used to indicate that the UE cancels use of the CG, and the identifier is used to indicate the target CG canceled from use by the UE.

In a possible implementation, the notification information includes a bitmap, and a value of the bitmap is used to indicate the target CG canceled from use by the UE.

In a possible implementation, the notification information includes a bitmap, when a value of a first-part bit in the bitmap is a first value, the first-part bit is used to indicate the cancel operation, and a value of a second-part bit in the bitmap is used to indicate the target CG canceled from use by the UE.

In a possible implementation, when the value of the first-part bit in the bitmap is a second value, the first-part bit is used to indicate an increase operation, the increase operation is used to instruct to increase CGs within one data transmission period included in the target CG configuration, and the value of the second-part bit in the bitmap is used to indicate a quantity of added CGs.

In a possible implementation, the notification information includes a quantity M, M is used to indicate the quantity of CGs within one data transmission period included in the target CG configuration, and M is a positive integer.

In a possible embodiment, the notification information includes a target field, and the target field is used to identify the target CG configuration.

In a possible embodiment, the UE transmits the notification information based on a first CG, and the target CG configuration is a CG configuration in which the first CG is located.

In a possible implementation, the notification information is used to notify the network element to increase the quantity of CGs within one data transmission period included in the target CG configuration. The UE further includes: a receiving module, configured to receive a downlink control information DCI message, where the DCI message is used to configure a dynamic grant DG within the data transmission period, and a data transmission amount of the UE supported by the DG matches a data transmission amount of the UE supported by a quantity of CGs to be added as indicated by the notification information. The transmission module is further configured perform, based on start times respectively corresponding to the N CGs and a start time of the DG, data exchange by using radio resources respectively corresponding to the N CGs and a radio resource of the DG.

In a possible implementation, the notification information is used to notify the network element to adjust a quantity of CGs within one data transmission period included in each of a plurality of CG configurations, and the plurality of CG configurations include the target CG configuration.

In a possible implementation, the notification information includes a bit field or a bitmap, and a value of the bit field or a value of the bitmap is used to instruct the network element to adjust the quantity of CGs within one data transmission period included in each of the plurality of CG configurations.

In a possible implementation, a first field in the bit field or the bitmap is used to identify each CG configuration among the plurality of CG configurations, and a second field in the bit field or the bitmap is used to indicate the quantity of CGs within one data transmission period included in each of the plurality of CG configurations.

In a possible implementation, the notification information includes an identifier of a target CG group, the target CG group is a CG group among a plurality of CG groups, each CG group among the plurality of CG groups includes the plurality of CG configurations, and the notification information is used to notify the network element to configure the quantity of CGs within one data transmission period included in each of the plurality of CG configurations based on the target CG group.

In a possible implementation, the notification information is used to notify the network element that the target CG among the N CGs within one data transmission period included in the target CG configuration is not used by the UE. The transmission module is specifically configured to transmit the notification information to the network element at a target time, where the target time is any time within a time period corresponding to the first CG among the N CGs; or the target time is any time within a time period corresponding to m CGs before the first CG among the target CG, and m is a positive integer greater than or equal to 1; or a time interval between the target time and a start time of the first CG among the target CG is greater than a preset duration.

In a possible implementation, the transmission module is specifically configured to: transmit uplink control information UCI, where the UCI includes the notification information; or transmit a media access control layer control element MAC-CE message, where the MAC-CE message includes the notification information; or transmit user equipment assistance information UAI, where the UAI includes the notification information.

The UE provided in the fifth aspect corresponds to the communication method provided in the first aspect. Therefore, for technical effects of the fifth aspect and any implementation in the fifth aspect, refer to the technical effects of the first aspect and the corresponding implementation of the first aspect.

A sixth aspect of this application provides a UE. The UE includes: a generation module, configured to generate notification information, where the notification information is used to notify a network element to configure L CGs for the UE within one data transmission period included in a target configured grant CG configuration, and L is a positive integer; and a transmission module, configured to transmit the notification information.

In a possible implementation, the UE further includes: a receiving module, configured to: receive a first control message transmitted by the network element, where the first control message is used to configure a data transmission period of the UE, and to receive at least one second control message transmitted by the network element, where the second control message is used to activate the L CGs within one data transmission period included in the target CG configuration. The transmission module is further configured to perform, based on start times respectively corresponding to the L CGs, data exchange by using radio resources respectively corresponding to the L CGs.

In a possible implementation, the notification information is used to notify the network element to configure a quantity of CGs for the UE within one data transmission period included in each of a plurality of CG configurations, where the plurality of CG configurations include a target CG configuration.

In a possible implementation, the notification information includes an identifier of a target CG group, the target CG group is a CG group among a plurality of CG groups, each CG group among the plurality of CG groups includes a plurality of CG configurations, and the plurality of CG configurations include the target CG configuration; and the notification information is used to notify the network element to configure the quantity of CGs within one data transmission period included in each of the plurality of CG configurations based on the target CG group.

In a possible implementation, the transmission module is specifically configured to transmit user equipment assistance information UAI to the network element, where the UAI includes the notification information.

The UE provided in the sixth aspect corresponds to the communication method provided in the second aspect. Therefore, for technical effects of the sixth aspect and any implementation in the sixth aspect, refer to the technical effects of the second aspect and the corresponding implementation of the second aspect.

A seventh aspect of this application provides a network element. The network element includes: a receiving module, configured to receive notification information, where the notification information is used to notify the network element that a target CG among N CGs within one data transmission period included in a target CG configuration is not used by a UE, or the notification information is used to notify the network element to increase a quantity of CGs within one data transmission period included in the target CG configuration; and a resource management module, configured to manage a radio resource of the target CG based on the notification information, or configure a resource for the UE based on the notification information.

In a possible implementation, the resource management module is specifically configured to transmit a control message to the UE, where the control message is used to adjust N CGs within one data transmission period included in the target CG configuration to M CGs, N is a positive integer, and M is a positive integer different from N.

In a possible implementation, the resource management module is specifically configured to dynamically schedule the radio resource of the target CG to other UEs.

In a possible implementation, the communication message is used to notify the network element to increase the quantity of CGs within one data transmission period included in the target CG configuration. The resource management module is specifically configured to transmit a downlink control information DCI message to the UE, where the DCI message is used to configure a dynamic grant DG within the data transmission period, and a data transmission amount of the UE supported by the DG matches a data transmission amount of the UE supported by a quantity of CGs to be added as indicated by the notification information.

The network element provided in the seventh aspect corresponds to the communication method provided in the third aspect. Therefore, for technical effects of the seventh aspect and any implementation in the seventh aspect, refer to the technical effects of the third aspect and the corresponding implementation of the third aspect.

An eighth aspect of this application provides a network element. The network element includes: a receiving module, configured to receive notification information, where the notification information is used to notify the network element to configure L CGs for a UE within one data transmission period included in a target configured grant CG configuration, and L is a positive integer; and a transmission module, configured to: transmit a first control message, where the first control message is used to configure the data transmission period of the UE, and transmit at least one second control message, where the at least one second control message is used to activate the L CGs within one data transmission period included in the target CG configuration. The receiving module is further configured to receive data transmitted based on start times respectively corresponding to the L CGs by using radio resources respectively corresponding to the L CGs, where the start times respectively corresponding to the L CGs and the radio resources respectively corresponding to the L CGs are determined based on the first control message and the at least one second control message.

The network element provided in the eighth aspect corresponds to the communication method provided in the fourth aspect. Therefore, for technical effects of the eighth aspect, refer to the technical effects of the fourth aspect.

A ninth aspect of this application provides an electronic device, including a memory and at least one processor. The memory is configured to store a program, and the at least one processor is configured to run the program, so that the electronic device implements the communication method provided in any one of the first aspect to the fourth aspect of this application.

A tenth aspect of this application provides a computer storage medium, configured to store a computer program. The computer program, when executed, is configured to implement the communication method provided in any one of the first aspect to the fourth aspect of this application.

An eleventh aspect of this application provides a computer program product including instructions. The instructions, when run on at least one computing device, cause the at least one computing device to implement the communication method provided in any one of the first aspect to the fourth aspect of this application.

### BRIEF DESCRIPTION OF DRAWINGS

FIG.1 is a schematic structural diagram of an example communication system according to an embodiment of this application;
FIG. 2 is a schematic structural diagram of an electronic device according to an embodiment of this application;
FIG. 3 is a schematic diagram of a communication frame in an XR service scenario according to an embodiment of this application;
FIG. 4 is a flowchart of a communication method according to an embodiment of this application;
FIG. 5A is a schematic diagram of time periods corresponding to four CGs configured within one data transmission period according to an embodiment of this application;
FIG. 5B is a schematic diagram of notifying a network element to cancel use of a CG 4 within a time period corresponding to a CG 1 according to an embodiment of this application;
FIG. 5C is a schematic diagram of canceling CGs within data transmission periods included in a plurality of CG configurations according to an embodiment of this application;
FIG. 6 is a schematic diagram of configuring CGs for a UE based on different configuration strategies according to an embodiment of this application;
FIG. 7 is a flowchart of another communication method according to an embodiment of this application;
FIG. 8 is a flowchart of still another communication method according to an embodiment of this application;
FIG. 9 is a schematic structural diagram of a UE according to an embodiment of this application;
FIG. 10 is a schematic structural diagram of another UE according to an embodiment of this application;
FIG. 11 is a structural diagram of a network element according to an embodiment of this application; and
FIG. 12 is a structural diagram of another network element according to an embodiment of this application.

### DESCRIPTION OF EMBODIMENTS

Technical solutions in embodiments of this application are clearly and completely described below with reference to drawings in embodiments of this application. Terms used in the following embodiments are only intended to describe particular embodiments, and are not intended to limit this application. As used in the specification and the claims of this application, a singular expression form "one", "a/an", "the", "foregoing", "said", or "this" is intended to include expressions such as "one or more", unless clearly indicated to the contrary in the context. It should be understood that, in embodiments of this application, "one or more" means one, two, or more than two. A term "and/or" describes an association relationship between associated objects and represents that three relationships may exist. For example, A and/or B may represent the following cases: only A exists, both A and B exist, and only B exists, where A and B may be singular or plural. A character "/" generally indicates an "or" relationship between associated objects.

Reference to "one embodiment" or "some embodiments" described in this specification means that a specific feature, structure, or characteristic described in combination with the embodiment is included in one or more embodiments of this application. Therefore, statements "in an embodiment", "in some embodiments", "in some other embodiments", "in some additional embodiments", and the like in different places in this specification do not necessarily refer to the same embodiment, but mean "one or more but not all embodiments", unless otherwise specially emphasized in another manner. Terms "comprise", "include", "have", and variants thereof all mean "include but not limited to", unless otherwise specially emphasized in another manner.

"A plurality of" in embodiments of this application represents two or more. It should be noted that, in the description of embodiments of this application, terms such as "first" and "second" are merely used for distinguishing, and cannot be understood as an indication or implication of relative importance, or an indication or implication of a sequence.

Embodiments of this application are applied to a communication system, which may be a 5th generation (5G) communication system, or may be an LTE and 5G hybrid architecture, a 5G new radio (5G New Radio, 5G NR) system, a new communication system in future communication development, or the like.

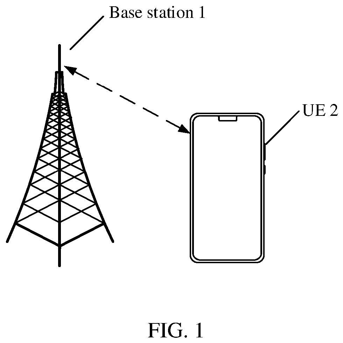

An example of the communication system is shown in FIG. 1. FIG. 1 includes a base station 1 and a UE 2.

In embodiments provided in this application, the base station 1 may be any type of device located on a network side and having a wireless transmission reception function, and includes but is not limited to a base station (gNodeB or gNB) or a transmission receiving point/transmission reception point (transmission receiving point/transmission reception point, TRP) in new radio (new radio, NR). The base station 1 may be a macro base station, a micro base station, a pico base station, a small cell, a relay station, a balloon station, or the like. The base station 1 may include one or more transmission reception points (Transmission Reception Point, TRP), which may be co-located or non-co-located. The base station 1 may alternatively be a wireless controller, a centralized unit (centralized unit, CU), and/or a distributed unit (distributed unit, DU) in a cloud radio access network (cloud radio access network, CRAN) scenario. The base station 1 may communicate with the UE 2, or may communicate with the UE 2 through a relay station. The UE 2 may communicate with a plurality of base stations in different technologies. For example, the UE 2 may communicate with a base station supporting the LTE network, may further communicate with a base station supporting the 5G network, and may further establish dual connectivity to a base station supporting the LTE network and a base station supporting the 5G network.

In embodiments provided in this application, the UE 2 may have various forms, such as a mobile phone (mobile phone), a tablet computer (Pad), a computer with a wireless transmission reception function, a virtual reality (virtual reality, VR) terminal device, an augmented reality (augmented reality, AR) terminal device, a wireless terminal in industrial control (industrial control), an on-board terminal device, a wireless terminal in self driving (self driving), a wireless terminal in remote medical (remote medical), a wireless terminal in a smart grid (smart grid), a wireless terminal in transportation safety (transportation safety), a wireless terminal in smart city (smart city), a wireless terminal in smart home (smart home), and a wearable terminal device. The UE may also be referred to as a terminal device, an access terminal device, an on-board terminal, an industrial control terminal, a UE unit, a UE station, a mobile station, a mobile console, a remote station, a remote terminal device, a mobile device, a UE terminal device, a terminal device, a wireless communication device, a UE agent, a UE apparatus, or the like. The terminal may also be a fixed terminal or a mobile terminal.

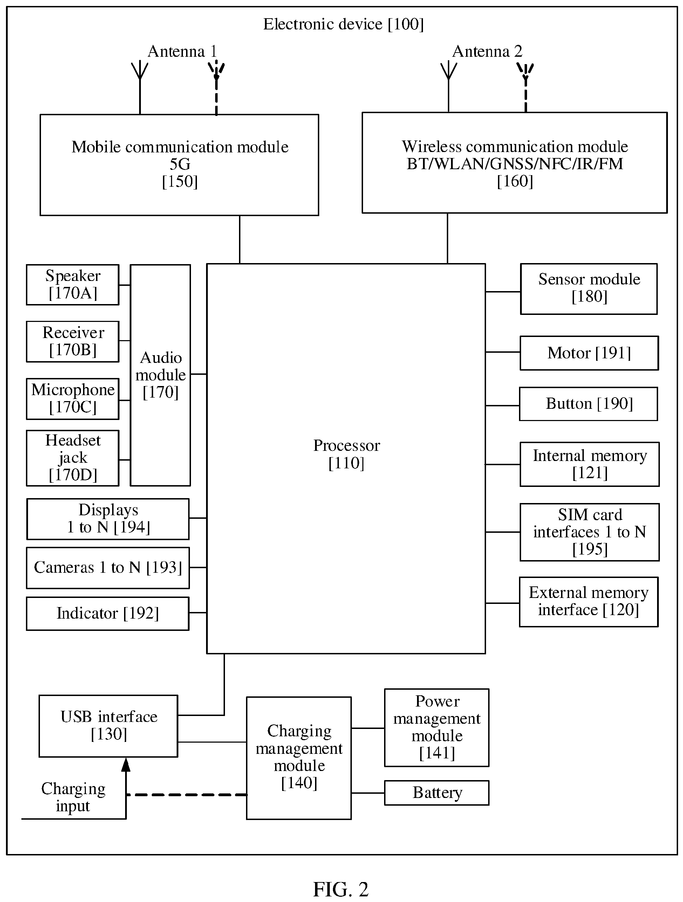

For example, FIG. 2 is a schematic structural diagram of the UE 2.

The UE 2 may include a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like.

It may be understood that the example structure in this embodiment of the present invention does not constitute a specific limitation on the UE 2. In some other embodiments of this application, the UE 2 may include more or fewer components than those shown in the figure, some merged components, some split components, or different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be devices independent of each other, or may be integrated in one or more processors.

The controller may generate an operation control signal based on instruction operation code and a timing signal, and control obtaining and execution of instructions.

A memory may be further arranged in the processor 110, which is configured to store instructions and data.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a standard USB specification, and may be specifically a Mini USB interface, a Micro USB interface, a USB Type C interface, or the like. The USB interface 130 may be configured to connect to a charger to charge the UE 2, or may be configured to transmit data between the UE 2 and a peripheral device. The USB interface may be further configured to connect to a headset to play audio through the headset. The interface may be further configured to connect to another electronic device such as an AR device.

It may be understood that an interface connection relationship between the modules illustrated in this embodiment of the present invention is merely an example for description, and does not constitute a limitation on a structure of the UE 2. In some other embodiments of this application, the UE 2 may use an interface connection manner different from that in the foregoing embodiment or use a combination of a plurality of interface connection manners.

The charging management module 140 is configured to receive a charging input from the charger. The charging management module 140 may supply power to the UE 2 through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health state (power leakage and impedance).

A wireless communication function of the UE 2 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the UE 2 may be configured to cover one or more communication frequency bands. Different antennas may be further reused to improve a utilization rate of the antennas. For example, the antenna 1 may be reused as a diversity antenna of a wireless local area network. In some other embodiments, the antennas may be used in combination with a tuning switch.

The mobile communication module 150 may provide a wireless communication solution applied to the UE 2, including 5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave through the antenna 1 for radiation. In some embodiments, at least some functional modules of the mobile communication module 150 may be arranged in the processor 110. In some embodiments, at least some functional modules of the mobile communication module 150 may be arranged in a same device as at least some modules of the processor 110.

The wireless communication module 160 may provide a wireless communication solution applied to the UE 2, including a wireless local area network (wireless local area networks, WLAN) (such as a wireless fidelity (wireless fidelity, Wi-Fi) network), bluetooth (bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more devices in which at least one communication processing module is integrated. The wireless communication module 160 receives an electromagnetic wave through the antenna 2, performs frequency modulation and filtering on the electromagnetic wave signal, and transmits the processed signal to the processor 110. The wireless communication module 160 may further receive a to-be-transmitted signal from the processor 110, perform frequency modulation and amplification on the to-be-transmitted signal, and convert the to-be-transmitted signal into an electromagnetic wave through the antenna 2 for radiation.

In some embodiments, the antenna 1 of the UE 2 is coupled to the mobile communication module 150, and the antenna 2 is coupled to the wireless communication module 160, so that the UE 2 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation systems, SBAS).

The UE 2 implements a display function through the GPU, the display 194, the application processor, and the like.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a Mini led, a MicroLed, a Micro-oLed, a quantum dot light emitting diode (quantum dot light emitting diodes, QLED), and the like. In some embodiments, the UE 2 may include 1 or N displays 194, where N is a positive integer greater than 1.

The UE 2 may implement a photographing function through the image signal processor (Image Signal Processor, ISP), the camera 193, the video codec, the GPU, the display 194, the application processor, and the like.

The ISP is configured to process data fed back by the camera 193. The ISP may further perform algorithm optimization on a noise point, brightness, and a skin tone of the image. The ISP may further optimize parameters such as an exposure and a color temperature of scene for which an image is to be taken. In some embodiments, the ISP may be arranged in the camera 193.

The camera 193 is configured to capture a still image or a video. In some embodiments, the UE 2 may include one or more cameras 193.

The external memory interface 120 may be configured to connect to an external memory card such as a micro SD card, to extend a storage capability of the UE 2. The external memory card communicates with the processor 110 by using the external memory interface 120, to implement a data storage function. for example, to store files such as music and videos into the external memory card.

The internal memory 121 may be configured to store computer-executable program code. The executable program code includes instructions. The internal memory 121 may include a program storage area and a data storage area. The program storage area may store an operating system, an application required for at least one function (for example, a sound playback function or an image playback function), and the like. The data storage region may store data (for example, audio data and an address book) and the like created during use of the UE 2. In addition, the internal memory 121 may include a high-speed random access memory, and may further include a non-volatile memory, for example, at least one disk storage device, a flash memory device, and a universal flash storage (universal flash storage, UFS). The processor 110 runs the instructions stored in the internal memory 121, and/or the instructions stored in the memory arranged in the processor, to perform various functional applications and data processing of the UE 2.

The UE 2 may implement an audio function, for example, music playback and sound recording, through the audio module 170, the speaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be arranged in the processor 110, or some functional modules of the audio module 170 are arranged in the processor 110.

The button 190 includes a power-on button, a volume button, and the like. The button 190 may be a mechanical button, or may be a touch button. The UE 2 may receive a button input, and generate a button signal input related to user settings and function control of the UE 2.

The motor 191 may generate a vibration prompt. The motor 191 may be configured to provide a vibration prompt for an incoming call, or may be configured to provide vibration feedback for touch. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may alternatively be customized.

The indicator 192 may be an indicator light, and may be configured to indicate a charging state or a battery change, or may be configured to indicate a message, a missed call, a notification, and the like.

The SIM card interface 195 is configured to connect to a SIM card. The SIM card may be inserted into the SIM card interface 195 or pulled out of the SIM card interface 195 to contact or be separated from the UE 2. The UE 2 may support 1 or N SIM card interfaces, where N is a positive integer greater than 1. The SIM card interface 195 may support a Nano SIM card, a Micro SIM card, a SIM card, or the like. A plurality of cards may be inserted into a same SIM card interface 195. The plurality of cards may be of a same type or different types. The SIM card interface 195 may also be compatible with different types of SIM cards. The SIM card interface 195 may be further compatible with an external memory card. The UE 2 interacts with a network by using a SIM card, to implement functions such as call making and data communication. In some embodiments, the UE 2 uses an eSIM, i.e., an embedded SIM card. The eSIM card may be embedded in the UE 2 and cannot be separated from the UE 2.

The above is described by taking the communication system including the base station 1 and the UE 2 as an example. In other possible implementations, the base station 1 in the communication system may be replaced by network elements of other forms. This is not limited in this application. For ease of understanding, the interaction between the base station 1 and the UE 2 is still used as an example.

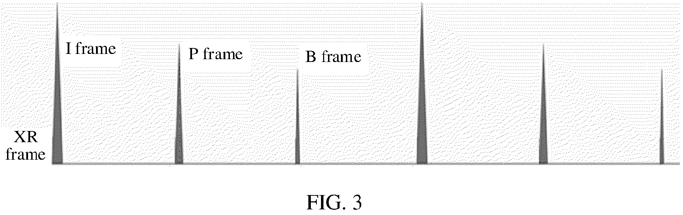

In an XR service scenario, communication frames transmitted during data exchange between the base station 1 and the UE 2 are periodic. As shown in FIG. 3, the UE 2 may periodically transmit an I frame (intra-coded frame, which may also be referred to as a key frame), a P-frame (predicted frame), and a B-frame (bidirectional frame) to the base station 1.

Generally, the base station 1 may first deliver a radio resource control (radio resource control, RRC) message to the UE 2, so as to configure, by using the RRC message, a communication frame transmission period and radio resources (e.g., frequency domain resources) required for transmitting data for the UE 2. At this time, the radio resources are not activated, and the UE 2 does not transmit data to the base station 1. Then the base station 1 delivers downlink control information (downlink control information, dci) to the UE 2 to activate the radio resources configured for the UE, so that the UE 2 transmits data to the base station 1 in each data transmission period by using the activated radio resources. To be specific, the UE 2 transmits an I frame to the base station 1 in a first period, transmits a P frame to the base station 1 in a second period, transmits a B frame to the base station 1 in a third period, transmits an I frame to the base station 1 in a fourth period, and so on. This resource scheduling manner is called semi-persistent scheduling (SPS).

However, in SPS, resources scheduled in each period are usually fixed. To be specific, the UE 2 transmits data in the first period, the second period, and the third period by using fixed configured radio resources (RRC signaling configuration and DCI-activated radio resources). As shown in FIG. 3, data amounts of the I frame, the P frame, and the B frame usually decrease gradually. Therefore, when transmitting the P frame and the B frame, the UE 2 completes transmission of all data in a part one data transmission period due to the small data amounts of the P frame and the B frame. Accordingly, the activated radio resources remain idle during a remaining part of the data transmission period, and cannot be used by other UEs as a result of the radio resources having been configured for the UE 2. Therefore, in the SPS scheduling manner, a part of the radio resources configured by the base station 1 for the UE 2 is wasted, and the base station 1 can transmit communication frames in an XR service scenario with only a small quantity of UEs in a same time period, which limits a quantity of UEs the base station 1 can serve.

Further, when the base station configures a plurality of configured grants (configured grant, CG) for the UE in each data transmission period, the UE may transmit data to the network element in a time period corresponding to each CG by using an activated radio resource corresponding to the CG. This resource configuration manner can alleviate the problem of resource wastes to a specific extent. However, in an actual application scenario, the UE often does not need to perform data exchange with the network element in time periods corresponding to some CGs. Therefore, the radio resources corresponding to these CGs still remain idle, causing resource wastes. Alternatively, the UE fails to complete transmission of all data to the network element in time periods corresponding to a plurality of CGs, which indicates that the radio resources allocated to the UE are insufficient. Therefore, the manners in which the base station configures radio resources for the UE still have problems.

An embodiment of this application provides a communication method, to improve, in a case that communication frames in an XR service scenario can be normally exchanged between a network element such as a base station and the UE, rationality of configuring radio resources for the UE by the network element.

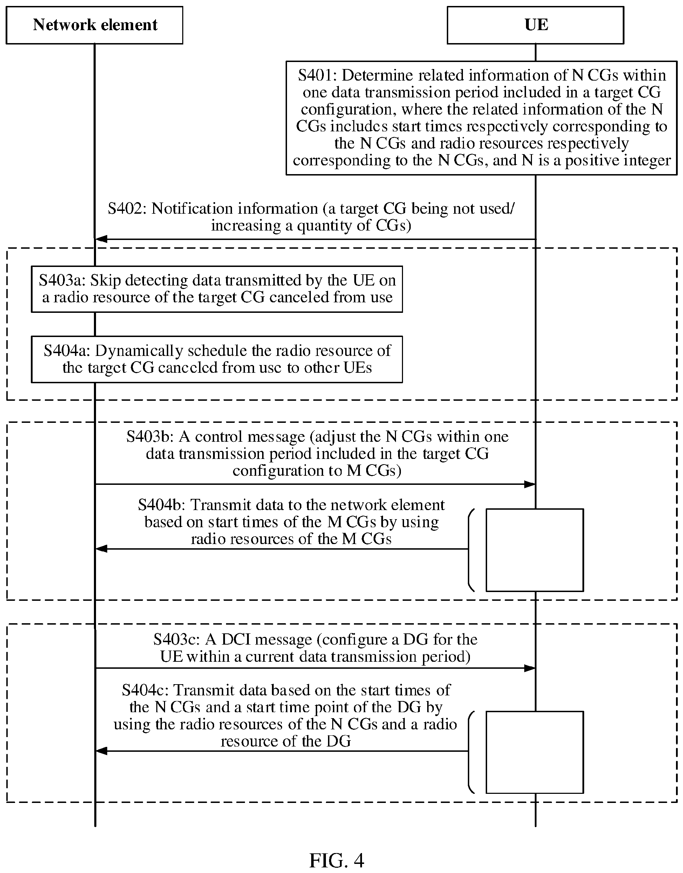

FIG. 4 shows a communication method according to an embodiment of this application. The data exchange between the network element and the UE includes the UE transmitting data to the base station (data upstream) and the base station delivering data to the UE (data downstream). For ease of understanding, in the communication method process shown in FIG. 4, a process of transmitting data, by the UE, to the network element is mainly described. For a specific implementation of delivering, by the network element, data to the UE, refer to related parts in the embodiment shown in FIG. 4.

The process of the communication method shown in FIG. 4 includes the following steps:
S401: A UE determines related information of N CGs within one data transmission period included in a target CG configuration configured by a network element for the UE, where the related information of the N CGs includes start times respectively corresponding to the N CGs and radio resources respectively corresponding to the N CGs, and N is a positive integer.

In this embodiment, when periodic service data (such as the communication frames in the XR service scenario shown in FIG. 3) is to be exchanged between the network element and the UE, the network element may perform pre-configurations for the UE. Specifically, the network element configures N CGs within one data transmission period included in the target CG configuration for the UE, and configures start times and radio resources (such as frequency domain resources) respectively corresponding to the N CGs.

The data transmission period is a CG configuration provided by the network element. In this embodiment, the network element may provide different CG configurations based on the different types of communication frames to be transmitted between the UE and the network element in different data transmission periods. For example, for I frame data, P frame data, and B frame data to be exchanged between the network element and the UE, the network element may respectively provide a CG configuration 1, a CG configuration 2, and a CG configuration 3. Moreover, when the network element configures CGs within one data transmission period for the UE, the network element may indicate a CG configuration to which the data transmission period belongs. Each CG configuration includes various configuration contents, including a data transmission period, a quantity of CGs included in one data transmission period, radio resources available for data transmission, and the like. In an actual application, each CG configuration may further include other configuration contents.

The start time corresponding to each CG is a time at which the UE starts to exchange data with the network element based on the radio resource of the CG. A time period in which the UE exchanges data based on the radio resource of the CG is a time period within the data transmission period. Time periods corresponding to a plurality of different CGs within one data transmission period do not overlap. Moreover, time intervals may exist among time periods corresponding to different CGs. For example, one or more slots (a slot is a time unit in a time domain structure) or one or more symbols (symbol) may exist between two time periods. The symbol may be, for example, an orthogonal frequency-division multiplexing (orthogonal frequency-division multiplexing, OFDM) symbol in one slot. In addition, the time interval between two time periods may be a fixed duration, for example, a duration corresponding to one slot or four symbols, or may be a non-fixed duration, for example, a time interval between time periods respectively corresponding to a first CG and a second CG is one slot, and a time interval between time periods respectively corresponding to the second CG and a third CG is two slots.

In this way, in each data transmission period, the UE may transmit data to the network element by using the configured radio resources within the time periods corresponding to the N CGs.

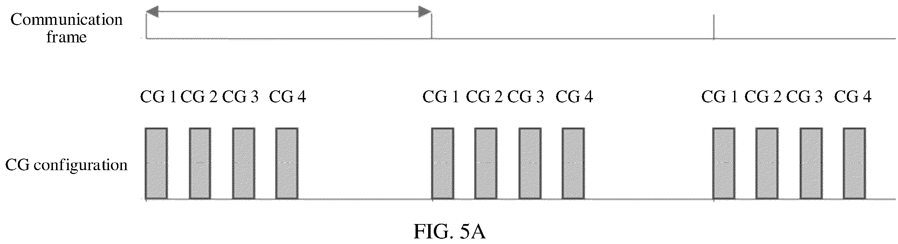

For example, as shown in FIG. 5A, the network element may indicate, for the UE through a first control message, that four CGs (that is, N is 4) are generated within one data transmission period included in a specified CG configuration (hereinafter referred to as a target CG configuration). Then, the UE may use transmit data to the network element within data transmission time periods respectively corresponding to a CG 1 to a CG 4 by using configured radio resources.

As an implementation example, the network element may configure, for the UE, N CGs within one data transmission period included in the target CG configuration by delivering an RRC message and a DCI message to the UE.

In a specific implementation, the network element may first deliver an RRC message to the UE to configure, for the UE, a period for transmitting data to the network element (hereinafter referred to as a data transmission period). Then, the network element delivers one or more DCI messages to the UE, so that the UE may activate, based on the one or more DCI messages, the CGs configured for the UE. Information included in the target CG configuration for the UE such as a quantity of CGs within one data transmission period, a start time of each CG, and an interval between different CGs may be carried in the RRC message, or may be carried in the DCI message, or may be obtained through calculation based on the RRC message and the DCI message.

For example, when the network element delivers a DCI message to the UE, the UE may calculate a start time of a first CG based on the RRC message and the DCI message, and then calculate a data transmission time period corresponding to the first CG based on the start time and a default duration of the time period, and determine a radio resource of the CG (that is, a radio resource to be used in the data transmission time period corresponding to the CG). Then, the UE further calculates a start time of a second CG based on a time interval between the first CG and the second CG, and determines a radio resource of the second CG. By repeating the foregoing operation, the UE may successively calculate a start time and a radio resource of each CG within one data transmission period included in the target CG configuration. As for a specific implementation in which the UE calculates the start time of the first CG based on a second control message, details are not described herein because related applications exist in actual application scenarios. again.

When the network element delivers a plurality of DCI messages to the UE, each DCI message is used to determine a start time of a CG. In this case, the UE may calculate the start time of the first CG based on the RRC message and the first DCI message, and then calculate an end time corresponding to the first CG (that is, determine the data transmission time period corresponding to the CG) based on the start time and the default duration of the time period. Then, the UE further calculates the start time of the second CG based on the RRC message and a second received DCI message (or based on a DCI message including an identifier of the second CG), and determines the radio resource of the second CG. By repeating the foregoing operation, the UE may successively calculate the start time and the radio resource respectively corresponding to each CG based on the RRC message and the plurality of DCI messages.

Similarly, when the network element needs to deliver data to the UE, a process similar to that described above may be performed. The network element activates a plurality of configured downlink assignments (configured downlink assignment, CDA) within one data transmission period included in a target SPS configuration among a plurality of SPS configurations by delivering an RRC message and a medium access control layer control element (medium access control layer control element, MAC-CE) to the UE. Moreover, the UE determines start times and radio resources of the plurality of CDAs within one data transmission period included in the target SPS configuration based on the first control message and at least one second control message, and exchanges data with the network element by using the radio resources of the plurality of CDAs based on the start times of the plurality of CDAs. Specifically, the UE may receive downlink data transmitted by the network element by using physical downlink shared channel (physical downlink shared channel, PDSCH) corresponding to the radio resources. For ease of understanding, in this embodiment, CG configuration is taken as an example for description.

The N CGs configured by the network element for the UE within one data transmission period included in the target CG configuration may deviate from an actual demand of the UE. For example, the UE may complete transmission of all data within a time period corresponding to a part of the CGs in one data transmission period. Alternatively, in one data transmission period, the UE may not complete transmission of all data within the time periods corresponding to the N CGs, Therefore, in this embodiment, the following steps may be further performed to notify the network element whether the current CG configuration for the UE matches the actual demand of the UE.

S402: The UE transmits notification information to the network element, where the notification information is used to notify the network element that a target CG among the N CGs within one data transmission period included in the target CG configuration is not used by the UE, or the communication message is used to notify the network element to increase a quantity of CGs within one data transmission period included in the target CG configuration.

In this embodiment, after determining the related information of the N CGs currently configured by the network element, the UE may notify, based on a service demand of the UE and the related information of the N CGs, the network element that a part of the CGs is not used by the UE (a redundancy of radio resources), or the quantity of CGs is insufficient (a shortage of radio resources).

As a first possible implementation, if the UE determines, during (or before) transmitting, by the UE, data to the network element by using the radio resources corresponding to the N CGs and based on an amount of currently to-be-transmitted data and a size of configured radio resources, that all of the data can be transmitted to the network element within M CGs (M is a positive integer less than N) within one data transmission period included in the target CG configuration it indicates that for remaining (N-M) CGs, radio resources respectively corresponding to the (N-M) CGs are idle, resulting in a problem of resource wastes. Therefore, the UE may generate a message including notification information, and transmit the message to the network element. In this case, the notification information is used to notify the network element of a quantity of CGs not used by the UE within one data transmission period or for notify the network element of CGs that are not used.

Alternatively, if the UE determines, based on the amount of currently to-be-transmitted data and the size of the configured radio resources, that the data transmission requires time periods corresponding to M CGs (M is a positive integer greater than N), it indicates that the UE cannot complete transmission of all of the data within the N CGs, resulting in a problem of shortage of resources. Therefore, the UE may generate a message including notification information, and transmit the message to the network element. In this case, the notification information is used to notify the network element to increase the quantity of CGs configured for the UE within one data transmission period.

Alternatively, the network element can provide a plurality of CG configuration strategies, and the plurality of configuration strategies that can be provided by the network element may be notified to the UE through an RRC message or another message. In this way, after the network element configures a plurality of CGs for the UE within one data transmission period based on one of the configuration strategies, the UE may determine, based on the amount of currently to-be-transmitted data and the size of the configured radio resources, whether the currently adopted configuration strategy has a problem of a waste or shortage of resources, and accordingly generate a message including notification information and transmit the message to the network element. At this time, the notification information is used to notify the network element to switch the CG configuration strategy from the current configuration strategy to a specified configuration strategy, i.e., to notify the network element that a part of the configured CGs is not used by the UE or to notify the network element to increase the quantity of CGs configured for the UE.

For example, it is assumed that the network element can provide three configuration strategies, and the three configuration strategies use same radio resources. A configuration strategy 1 is to configure two CGs in one data transmission period, a configuration strategy 2 is to configure three CGs in one data transmission period, and a configuration strategy 3 is to configure four CGs in one data transmission period. If the network element initially performs configuration for the UE by using the configuration strategy 2, when the UE determines that the configuration strategy 2 leads to a problem of resource wastes, the notification information is used to notify the network element to switch the CG configuration strategy from the configuration strategy 2 to the configuration strategy 1; or when the UE determines that the configuration strategy 2 leads to a problem of a shortage of resources, the notification information is used to notify the network element to switch the CG configuration strategy from the configuration strategy 2 to the configuration strategy 3.

For example, the message generated by the UE that includes the notification information may be uplink control information (uplink control information, UCI), a CG-UCI message, UE assistance information (UE assistance information, UAI), a MAC-CE message, or the like. In an actual application, the message may be a message of other types. This is not limited in this embodiment.

Taking the UCI message as an example, a bit field may be defined in the UCI message. The bit field may be defined based on a reserved field in the UCI message. The bit field may include one or more bits. In this way, when the UE generates the UCI message, a value of one or more bits included in the bit field may be used as the notification information. Alternatively, a bitmap (bitmap) may be defined in the UCI message, and a value of the bitmap may be used as the notification information. These implementations are described below by using examples.

In a first implementation, a field "cancel CG occasion indicator" is defined in the UCI message, and the field may include one bit. When a value of the field is 1, the message may be used to notify the network element that one (or more) CG(s) among the N CGs configured in one data transmission period are not used by the UE. When the value of the field is 0, it indicates that the UE uses all CGs among the N CGs.

A specific CG (or CGs) to be canceled from use by the UE may be predefined. For example, a last CG (or last two CGs) among the N CGs is to be canceled from use by default. Alternatively, the UE may select, from the plurality of configuration strategies provided in advance by the network element for the UE, a configuration strategy with a relatively small quantity of configured CGs to configure the quantity of CGs for the UE within one data transmission period, to cancel a part of the CGs currently configured for the UE (the quantity of CGs corresponding to the selected configuration strategy is less than the quantity of the configured CGs).

Similarly, a field "increase CG occasion indicator" may be defined in the UCI message. When a value of the field is 1, the message may be used to notify the network element to increase the quantity of CGs configured for the UE in one data transmission period, for example, notify the network element to add one (or more) CG(s). When the value of the field is 0, it indicates that the configured N CGs can support the UE to transmit all data to the network element.

In a second implementation, a field "CG occasion indicator" may be added in the UCI message, and the field may include two bits. When a value of the field is "01", the message may be used to notify the network element that one (or more) CG(s) among the N CGs configured in one data transmission period are not used by the UE. A specific CG (or CGs) to be canceled from use by the UE may be predefined. When the value of the field is "10", it may be used to notify the network element to increase the quantity of CGs configured for the UE within one data transmission period. When the value of the field is "00" or "11", it indicates that the UE uses the N CGs to transmit all data to the network element.

In a third implementation, a bitmap for canceling CGs is defined in the UCI message. Specifically, when generating the UCI message, the UE may use a value of the bitmap to indicate a cancel operation and an identifier of a target CG that is canceled, thereby notifying the network element of one or more CGs that are canceled from use by the UE.

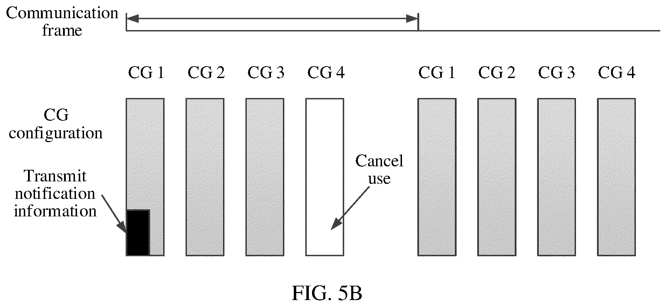

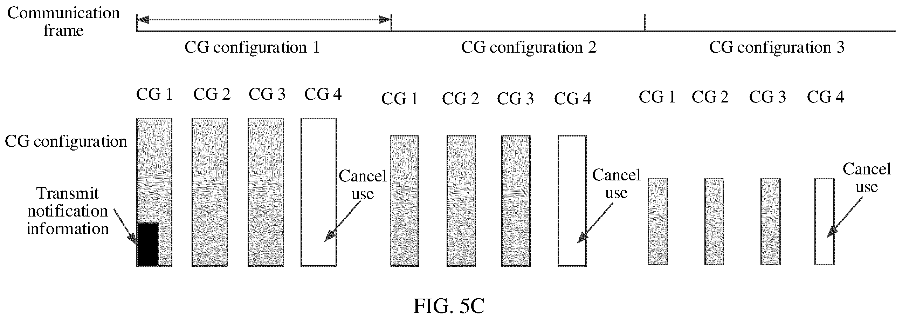

Example 1: Assuming that one or more consecutive CGs with later times, the network element may determine a first bit whose value is 0 based on a value of the bitmap in the UCI message, so that the network element may determine that the UE cancels use of a CG corresponding to the bit and a subsequent CG (i.e., determines the target CG). In this case, the first bit with a value of 0 may be used as an identifier of the CG that is to be canceled from use by the UE. For example, the network element initially configures four CGs for the UE (e.g., the CG 1 to the CG 4 shown in FIG. 5). When the UE cancels use of the CG 3 and the CG 4 in FIG. 5, the value of the field of the bitmap in the UCI message generated and transmitted by the UE to the network element may be "110", so as to notify the network element that the third CG and subsequent CGs are canceled from use by the UE in the current data transmission period, i.e., the CG 3 and the CG 4 are canceled from use by the UE.

Example 2: The bitmap in the UCI message includes a plurality of bits, and each bit among the plurality of bits can separately indicate whether the UE cancels the use of each configured CG. For example, the network element initially configures four CGs (e.g., the CG 1 to the CG 4 shown in FIG. 5) for the UE. When the bitmap field in the UCI message transmitted by the UE to the network element is "1010", since values of a second bit and a fourth bit are 0, the value of the bitmap can notify the network element that the second CG and the fourth CG are canceled from use by the UE in the current data transmission period, i.e., the CG 1 to the CG 4 are canceled from use by the UE.

Example 3: The bitmap in the UCI message is a two-level bitmap. To be specific, a first part of the bits (first-level bits) in the bitmap may be used to notify the network element that the UE cancels use of a part of the configured CGs (when a value of the first part of the bits is a first value), or to request to increase the quantity of CGs (when the value of the first part of the bits is a second value), and a second part of the bits in the bitmap (second-level bits) may be used to indicate a quantity of CGs involved (e.g., indicate a quantity of CGs that are canceled, or a quantity of CGs that need to be added). For example, the bitmap in the UCI message may include four bits, where a first bit and a second bit may be used to indicate a CG-targeted operation. For example, when values of the first two bits are "01", it indicates that the CG-targeted operation is specifically canceling a CG; when the values of the first two bits are "10", it indicates that the CG-targeted operation is specifically increasing a quantity of CGs; and when values of the first two bits are "11", it indicates that the CG-targeted operation is specifically switching a CG quantity configuration. Moreover, when the UE cancels use of a part of the CGs, a third bit and a fourth bit may be used to indicate a quantity of CGs canceled from use by the UE. For example, when values of the last two bits are "00", it indicates that the quantity of CGs canceled from use by the UE is 1; when the values of the last two bits are "01", it indicates that the quantity of CGs canceled from use by the UE is 2; when the values of the last two bits are "10", it indicates that the quantity of CGs canceled from use by the UE is 4; and when the values of the last two bits are "11", it indicates that the quantity of CGs canceled from use by the UE is 8. When a part of the bits in the bitmap indicates a "cancel" operation, the other bits may be used to identify CGs that are canceled (for details, refer to the related descriptions in Example 1 and Example 2). Similarly, when the UE requests to increase the quantity of CGs or switch the quantity of CGs, the third bit and the fourth bit may be used to indicate a quantity of CGs the UE requests to add, or for indicate a quantity of CGs after configuration strategy switching.

In a fourth implementation, the communication information may specifically be a quantity M of the CGs, where M is a positive integer greater than 1, and is used to indicate a quantity of CGs to be activated within one data transmission period included in the target CG configuration desired by the UE. Thus, the network element may subsequently compare whether the quantity M of the CGs included in the communication information is consistent with the quantity N of the CGs configured for the UE. If the quantity M is inconsistent with the quantity N of the CGs, it indicates that the UE requests to cancel use of a part of the configured CGs or requests to increase CGs. Specifically, when M is greater than N, it indicates that the notification information is used to notify the network element to increase the quantity of CGs within one data transmission period included in the target CG configuration, and a quantity of CGs to be added is (M - N). When M is less than N, it indicates that the notification information is used to notify the network element that a part of the CGs among the N CGs within one data transmission period included in the target CG configuration that are not used by the UE, and a quantity of CGs not used is (N - M). If the quantity M is consistent with the quantity N of the CGs, it indicates that the UE does not request to adjust the CGs.

It is worth noting that the foregoing implementation examples of transmitting, by the UE, notification information to the network element are merely example descriptions. In other embodiments, the UE may transmit the notification information to the network element in other manners, for example, transmits the notification information to the network element through a combination of the foregoing implementation examples, or by transmitting messages of other types such as a MAC CE message or a UAI message (including the notification information) to the network element, in which some fields or are added or redefined in the message, so as to carry the notification information.

Since the notification information transmitted by the UE to the network element based on the current CG configuration may indicate a use demand of the UE for the target CG configuration, the network element can learn a use demand of the UE for CGs based on the notification information, thereby helping the network element improve rationality of configuring CGs for the UE based on the notification information. For example, after the network element subsequently properly adjusts the quantity of CGs configured for the UE and start times thereof, the UE may transmit, based on the configured CGs, all data to be transmitted within a current data transmission period to the network element. In this way, a demand of the UE for radio resources during the data exchange with the network element is satisfied, while a resource waste as a result of radio resources corresponding to some CGs being left idle within the current data transmission period is avoided. In this way, communication frames in an XR service scenario can be normally exchanged between the network element and the UE, and the rationality of configuring radio resources for the UE by the network element is improved.

The specific implementation in which the UE transmits the notification information for the target CG configuration, so as to notify the network element to adjust the quantity of CGs within the data transmission period included in the target CG configuration is mainly described above. In an actual application, the network element may provide one or more CG configurations for the UE. When the network element provides a plurality of CG configurations, the UE may indicate, for the network element, a CG configuration for which current notification information is transmitted.

In a first implementation example, the notification information transmitted by the network element to the UE may include a target field. The target field may include one or more bits, to identify a target CG configuration among the plurality of CG configurations through the target field. For example, the network element provides three CG configurations to the UE, namely, a CG configuration 1, a CG configuration 2, and a CG configuration 3. In this case, the target field may include two bits. When a value of the target field is "00", the target field may indicate the CG configuration 1; when the value of the target field is "01", the target field may indicate the CG configuration 2; and when the value of the target field is "10", the target field may indicate the CG configuration 3.

In a second implementation example, the UE may identify the target CG configuration by using a CG through which the notification information is transmitted to the network element. Specifically, when the UE needs to adjust CGs within a data transmission period included in the target CG configuration, the UE may transmit notification information to the network element based on a first CG within the data transmission period included in the target CG configuration. The first CG is one of the plurality of CGs within the data transmission period. In this way, the network element may determine, based on a CG corresponding to a radio resource through which the notification information is received, a CG configuration in which the CG is located (the CG configuration is the foregoing target CG configuration), so that the network element may determine that the UE transmits the notification information for the CGs within the data transmission period included in the CG configuration. Optionally, the network element may alternatively transmit the notification information to the network element based on other CGs within the data transmission period, such as a second CG or a third CG.

The foregoing two implementations are merely example descriptions. In an actual application between the UE and the network element, a CG configuration for which the UE transmits the notification information may be determined in other manners. This is not limited in this embodiment.

It is worth noting that the UE transmits the notification information to the network element in order to notify the network element that a part of the CGs are canceled from use by the UE, so that the network element can manage radio resources of the part of the CGs, or to notify the network element to increase CGs, so that the network element can schedule more CGs or dynamic grants (DG) for the network element. Therefore, the UE may transmit the notification information to the network element before a start time of the part of the CGs canceled from use (a redundancy of CGs), or before an end time of the last CG (a shortage of CGs).

Specifically, when the UE determines, based on related information corresponding to the N CGs and a size of radio resources, that transmission of all data can be completed within the current data transmission period based on first a CGs (a is less than N), radio resources of the other b CGs are idle in the current data transmission period (a + b = N). In this case, the UE may transmit notification information to the network element at a target time before a start time of the other b CGs. A time interval between the target time and a start time of an (a+1)^{th} CG is T. In the time interval T, the network element can dynamically schedule the radio resources of the b CGs configured for the UE to other UEs for data transmission, thereby effectively improving a utilization rate of the radio resources. A duration of the time interval T may be greater than a preset duration, for example, greater than a duration of a timing advance (timing advance, TA).

The target time may, for example, be any time within a time period corresponding to the first CG. In other words, when the UE transmits data to the network element based on the first CG, the UE may transmit the notification information together to the network element. As shown in FIG. 5B, the UE may transmit the notification information to the network element in the time period corresponding to the CG 1, to notify the network element that the CG 4 is canceled from use by the UE. Alternatively, the target time may be any time within time periods corresponding to m CGs before the (a+1)^{th} CG. In other words, the network element is notified in advance by time intervals between the m CGs that the radio resources corresponding to the remaining b CGs are canceled from use by the UE, where m is a positive integer greater than or equal to 1.

For another example, when the UE determines, based on the related information corresponding to the N CGs and the size of radio resources, that it is difficult to complete the transmission of all of the data to the network element within the current data transmission period, the UE may transmit the notification information to the network element before the start time of the last CG among the N CGs. For a specific implementation of the time at which the UE transmits the notification information, refer to the related description of the foregoing target time at which the notification information is transmitted. Details are not described herein. In this way, the network element can transmit, within a time interval between the target time and the end time of the last CG, a control message to the UE, to increase the quantity of CGs allocated to the UE. In this case, the UE has M CGs within one data transmission period (M > N). Alternatively, the network element can schedule, within the time interval, DGs for the UE within the data transmission period, so that the UE may transmit data to the network element within one data transmission period based on the N CGs and the dynamically scheduled DGs. Thus, the UE may transmit, within the current data transmission period, data to the network element based on more CGs, to satisfy a data transmission demand of the UE.

In a further possible implementation, after receiving the notification information transmitted by the UE, the network element may manage, based on the notification information, a radio resource of the target CG canceled from use by the UE, or configure resources for the UE based on the notification information. Specifically, the network element may dynamically schedule, based on the notification information, the radio resource of the target CG canceled from use by the UE, or may statically adjust the CG configuration for the UE, or may dynamically adjust the CG configuration, which is respectively described below in detail.

When the network element dynamically schedules the radio resource of the target CG canceled from use by the UE, this embodiment may further include the following steps:
S403a: The network element skips detecting data transmitted by the UE on a radio resource of the target CG canceled from use.

It may be understood that since the UE cancels the use of the target CG, the UE does not use the radio resource corresponding to the target CG to transmit data to the network element. Therefore, after determining the target CG based on the notification information, the network element may skip detecting whether the UE transmits data on the radio resource of the target CG.

S404a: The network element dynamically schedules the radio resource of the target CG canceled from use to other UEs.

In this way, the radio resource of the target CG is not left idle, thus avoiding a waste of the radio resource of the target CG, and improving a utilization rate of the radio resource. In this case, the CG configuration for the UE remains unchanged, that is, the UE still has N CGs for transmitting data to the network element within a next data transmission period included in the target CG configuration.

After performing step S403a, the network element may further perform step S404a, or may not perform step S404a. This is not limited herein.

When the network element performs static adjustment on the CG configuration for the UE, this embodiment may further include the following steps:
S403b: The network element transmits a control message to the UE, where the control message is used to adjust, for the UE, the N CGs within one data transmission period included in the target CG configuration to M CGs, and M is a positive integer different from N.

In this embodiment, the network element may determine a CG configuration adjustment strategy based on the notification information transmitted by the UE, for example, increasing the quantity of the currently configured CGs or reducing the quantity of the currently configured CGs, generates a corresponding control message based on the adjustment strategy, and transmits the control message to the UE.

For example, the control message transmitted by the network element may be, for example, a DCI message, where the DCI message may carry the adjusted quantity M of CGs, so as to implement the adjustment of the quantity of CGs configured for the UE within one data transmission period from N to M, and M is not equal to N. For a specific implementation in which the network element transmits the control message to the UE, refer to the related description of delivering, by the network element, the DCI message to the UE. Details are not described herein.

In this embodiment, the network element may transmit the control message to the UE within a same data transmission period in which the notification information is received from the UE, so as to adjust a quantity of CGs within the data transmission period.

It should be noted that, the foregoing implementation of adjusting the quantity of CGs of the UE within one data transmission period is merely an example description. In other embodiments, the network element may adjust the quantity of CGs in other manners.

S404b: The UE transmits data to the network element based on a start time of the M CGs by using radio resources of the M CGs.

It may be understood that, after the quantity of CGs is adjusted from the initially configured N to M, the UE may transmit data to the network element in time periods corresponding to the M CGs by using the radio resources allocated to the M CGs. Since the UE can transmit, in the time periods corresponding to the M CGs, all data to be transmitted within the current data transmission period to the network element, a demand of the UE for radio resources during the data transmission is satisfied, while a resource waste as a result of radio resources corresponding to some CGs being left idle within the current data transmission period is avoided. In this way, communication frames in an XR service scenario can be normally exchanged between the network element and the UE, and the rationality of configuring radio resources for the UE by the network element is improved.

When the network element performs dynamic adjustment on the CG configuration for the UE, this embodiment may further include the following steps:
S403c: The network element transmits a DCI message to the UE, where the DCI message is used to configure a DG for the UE within the current data transmission period, and a data transmission amount of the UE supported by the DG matches a data transmission amount of the UE supported by a quantity of CGs to be added as indicated by the notification information that is previously transmitted.

When the UE requests to increase the quantity of CGs in the current data transmission period, the network element may estimate, based on the quantity of CGs requested to be added as indicated in the notification information, an amount of data the UE needs to transmit, and then select an idle radio resource from a resource pool based on the data amount.

Then, the network element may calculate, based on a size of the radio resource and the amount of data the UE needs to transmit, a duration for which the UE uses the radio resource after the radio resource is scheduled to the UE within the current data transmission period. In other words, the amount of data the UE needs to transmit by using the dynamically scheduled radio resource is greater than or equal to the amount of data that can be transmitted by using the quantity of CGs requested to be added by the UE. Thus, the network element may generate the DCI message based on the radio resource that needs to be dynamically scheduled. The DCI message is used to configure a dynamic grant (dynamic grant, DG) for the UE within the current data transmission period. A radio resource in the DG is the radio resource dynamically scheduled by the network element for the UE.

S404c: The UE transmits data to the network element based on the start times respectively corresponding to the configured N CGs and a start time of the DG by using the radio resources respectively corresponding to the N CGs and a radio resource of the DG.

It may be understood that, after the DG is dynamically configured for the UE, the UE may have sufficient radio resources to transmit, to the network element, all data that needs to be transmitted within the current data transmission period based on the N CGs and the DG, thereby satisfying a demand of the UE for radio resources during the data transmission. In this way, communication frames in an XR service scenario can be normally exchanged between the network element and the UE, and the rationality of configuring radio resources for the UE by the network element is improved.

It should be noted that, after the network element configures the DG for the UE, the UE still transmits data to the network element based on the N CGs within the next data transmission period included in the target CG configuration, that is, the DG is valid only in the current data transmission period.

In this embodiment, the static or dynamic adjustment of the CG configuration within the current data transmission period is mainly described, including canceling, by the network element, a part of the CGs configured for the UE, increasing the quantity of CGs configured for the UE, or configuring, by the network element, the DG for the UE. In other embodiments, the network element may adjust a quantity of CGs configured for the UE or add a DG within the next data transmission period. In this case, a time at which the UE transmits the notification information to the network element within the current data transmission period is not limited. For example, the UE may transmit the notification information to the network element at an end time of the N^{th} CG, or may transmit the notification information to the network element at the start time of the first CG.

Moreover, the UE may transmit data to the network element within each data transmission period included in the target CG configuration based on a same quantity of CGs. Alternatively, the UE may transmit data to the network element in a plurality of data transmission periods included in the target CG configuration based on a periodically changing quantity of CGs. For example, the network element may cyclically configure the quantity of CGs for the UE based on {six CGs, four CGs, two CGs}. Specifically, the network element may configure, for the UE, six CGs in a first data transmission period included in the target CG configuration, four CGs in a second data transmission period included in the target CG configuration, two CGs in a third data transmission period included in the target CG configuration, and six CGs in a fourth data transmission period included in the target CG configuration, and so on.

When the UE requests to adjust the quantity of CGs to five in the first data transmission period included in the target CG configuration, a CG configuration performed by the network element for the UE is {five CGs, four CGs, two CGs}. Further, if the UE notifies the network element to cancel a last CG from use within the second data transmission period, a CG configuration performed by the network element for the UE may be changed to {five CGs, three CGs, two CGs}.

A specific implementation in which the UE transmits notification information for a CG configuration (i.e., the target CG configuration) is described above. In an actual application, the network element may provide a plurality of CG configurations for the UE. Moreover, the UE may transmit a single piece of notification information separately for each CG configuration, so as to notify the network element of a condition about use of CGs within a data transmission period included in each CG configuration by the UE.

Alternatively, the UE may transmit a single piece of notification information for a plurality of CG configurations, and notify, based on the single piece of notification information, the network element of a condition about use of CGs within a data transmission period included in each CG configuration by the UE.

Specifically, the notification information transmitted by the UE to the network element may include an identifier of a CG configuration and notification content of the UE corresponding to each CG configuration. The notification content may indicate a condition about use of CGs within a data transmission period included in the CG configuration by the UE. For example, the notification content may indicate that the UE cancels use of a part of the CGs within the data transmission period included in each CG configuration, or requests to increase a quantity of CGs. For a specific implementation, refer to the related description of the adjustment of the quantity of CGs within the data transmission period included in the target CG configuration. Details are not described herein. For example, the UE may transmit, to the network element, notification information including {{CG configuration id: notification content}, ..., {CG configuration id: notification content}}.

For example, the network element provides three CG configurations, to the UE, which are respectively the CG configuration 1, the CG configuration 2, and the CG configuration 3 shown in FIG. 5C. In this case, the notification information transmitted by the UE to the network element may include { {CG configuration 1: notification content 1}, {CG configuration 2: notification content 2}, {CG configuration 3: notification content 3}}. In this way, the network element may determine, based on the notification content 1 in the notification information, that the UE cancels use of the CG 4 within a data transmission period included in the CG configuration 1, and manage a radio within a data transmission period included in the CG configuration 1 (e.g., reclaim the radio resource of the CG 4); determine, based on the notification content 2, that the UE cancels use of the CG 4 within a data transmission period included in the CG configuration 2, and manage a radio resource within a data transmission period included in the CG configuration 2; and determine, based on the notification content 3 in the notification information, that the UE cancels use of the CG 4 within a data transmission period included in the CG configuration 3, and manage a radio resource within a data transmission period included in the CG configuration 3.

For example, the notification information transmitted by the UE may include a bit field or a bitmap. A value of the bit field or a value of the bitmap may be used to indicate a quantity of CGs within a data transmission period included in each CG configuration. The value of the bit field or the bitmap may indicate { {CG configuration id: notification content}, ..., {CG configuration id: notification content} }.

During actual implementation, the bit field or the bitmap includes at least a first field (including a plurality of bits) and a second field (including a plurality of bits). The first field is used to identify each CG configuration among a plurality of CG configurations, and the second field is used to indicate a quantity of CGs within one data transmission period included in each of the plurality of CG configurations (i.e., the foregoing notification content). For example, the first field may include a plurality of bits respectively used to identify each CG configuration, and the second field may include a plurality of bits respectively used to indicate each notification content.

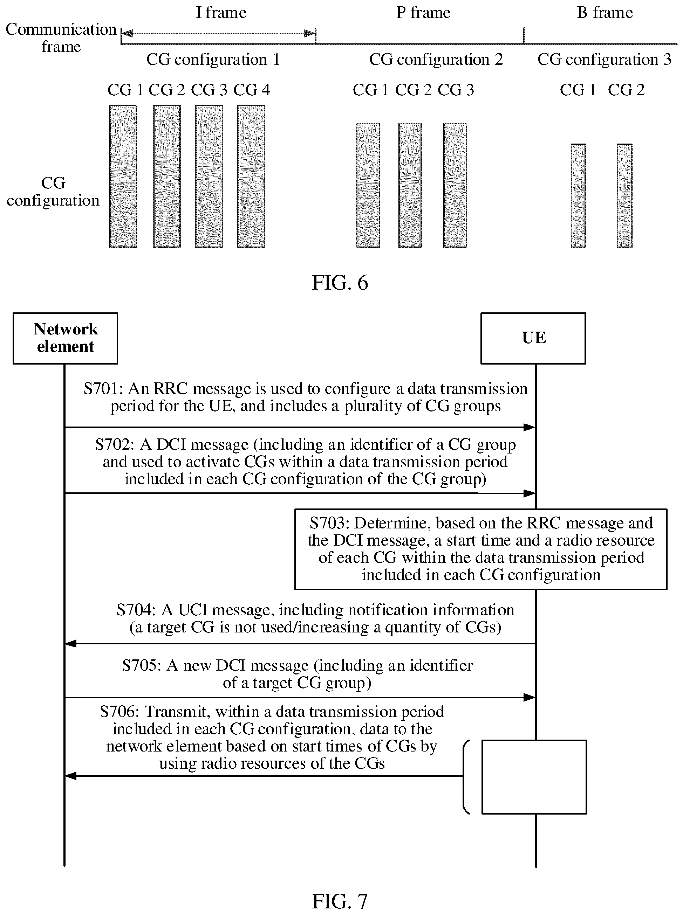

In an XR service scenario, the network element may provide, based on different types of communication frames (including I frames, P frames, and B frames), different CG configurations for the UE within data transmission periods for transmitting different types of communication frames. For example, the network element may have the CG configuration 1, the CG configuration 2, and the CG configuration 3. The CG configuration 1 has four (a largest quantity) CGs configured for the UE, and radio resources corresponding to the CGs have highest transmission performance. The CG configuration 3 has two (smallest quantity) CGs configured for the UE, and radio resources corresponding to the CGs have lowest transmission performance. As shown in FIG. 6, when the network element and the UE exchange I frames, the network element may perform a configuration for the UE based on the CG configuration 1; when the network element and the UE exchange P frames, the network element may perform a configuration for the UE based on the CG configuration 2; and when the network element and the UE exchange B frames, the network element may perform a configuration for the UE based on the CG configuration 3. In this case, in the first data transmission period, the UE transmits I frame data to the network element by using the radio resources with the highest transmission performance within time periods corresponding to the four CGs; in the second data transmission period, the UE transmits P frame data to the network element by using the radio resources with medium transmission performance within time periods corresponding to the three CGs; in the third data transmission period, the UE transmits B frame data to the network element by using the radio resources with the lowest transmission performance within time periods corresponding to the two CGs; in the fourth data transmission period, the UE transmits I frame data to the network element by using the radio resources with the highest transmission performance within the time periods corresponding to the four CGs; and so on. In this way, the UE may use different radio resources (e.g., frequency domain resources), to transmit different types of communication frames by using different quantities of CGs, so that flexibility and rationality of configuring radio resources by the network element for the UE can be improved, which helps further improve a utilization rate of resources of the network element. For example, radio resources in different frequency domains can all be fully utilized.

Accordingly, if the UE transmits notification information to the network element within the data transmission period for transmitting an I frame to the network element, to notify the network element that a part of the configured CGs is canceled from use by the UE, or to notify the network element to increase the quantity of CGs configured for the UE, the network element may deliver a control message to the UE, to adjust the quantity of CGs within the data transmission period in which the UE transmits the I frame to the network element, for example, adjust the quantity of CGs from N to M, but does not adjust quantities of CGs within data transmission periods in which the UE transmits communication frames of other types. In this case, the quantity of CGs within the data transmission period in which the UE transmits a P frame to the network element and the quantity of CGs within the data transmission period in which the UE transmits a B frame to the network element are not changed. The configuration shown in FIG. 6 is still used as an example. Assuming that the network element adjusts, based on the notification information transmitted by the UE, the quantity of CGs within the data transmission period in which the UE transmits an I frame to the network element from four to three, in the first data transmission period and the fourth data transmission period (and a subsequent (3n+1)^{th} data transmission period), the UE transmits data to the network element by using the radio resources with the highest data transmission performance within the time periods corresponding to three CGs. The quantity of CGs within the data transmission period in which the UE transmits a P frame to the network element (e.g., the second data transmission period) is kept at three, and the quantity of CGs within the data transmission period (e.g., the third data transmission period) in which the UE transmits a B frame to the network element is kept at 2.

In a possible implementation, when the UE transmits communication frames of different types to the network element based on different CG configurations, the network element may further perform batch adjustment of the CG configurations of the UE based on a CG group (CG group). The CG group includes a plurality of CG configurations. CGs within one data transmission period included in different CG configurations may be the same, or may differ in quantity or radio resource.

FIG. 7 is a schematic flowchart of another communication method according to this application. In the communication method shown in FIG. 7, a UE may periodically transmit an I frame, a P frame, and a B frame to a network element in sequence, and the network element may provide a plurality of CG groups to configure quantities of CGs (and radio resources) corresponding to the I frame data, the P frame, and the B frame data transmitted by the UE. As shown in FIG. 7, the method may specifically include the following steps:
S701: The network element transmits an RRC message to the UE, where the RRC message includes a plurality of CG groups, each CG group is used to configure a quantity of CGs within a data transmission period included in each CG configuration in which the UE transmits the I frame data, the P frame data, and the B frame data, and the RRC message is used to configure a data transmission period of the UE.

In the CG group, a CG configuration identifier and a CG quantity may be defined in a format { {CG configuration id, CG quantity}, {CG configuration id, CG quantity}, ..., {CG configuration id, CG quantity} }. The CG configuration id is used to identify CG configurations corresponding to different types of communication frames transmitted by the UE, and the CG quantity indicates a quantity of CGs for the UE within one data transmission period. Quantities of CGs configured by the network element for the UE when transmitting different types of communication frames may be the same or different, and radio resources used may be the same or different.

For example, the network element supports two CG groups. A CG group 1 is specifically { {CG configuration 1, 6}, {CG configuration 2, 4}, and {CG configuration 3, 2}}, indicating that the UE has six CGs within a data transmission period included in the CG configuration 1 for transmitting the I frame data, has four CGs within a data transmission period included in the CG configuration 2 for transmitting the P frame data, and has two CGs within a data transmission period included in the CG configuration 3 for transmitting the B frame data. The CG group 2 is specifically { {CG configuration 1, 4}, {CG configuration 2, 2}, and {CG configuration 3, 1}}, indicating that the UE has four CGs within the data transmission period included in the CG configuration 1 for transmitting the I frame data, has two CGs within the data transmission period included in the CG configuration 2 for transmitting the P frame data, and has one CG within the data transmission period included in the CG configuration 3 for transmitting the B frame data.

S702: The network element transmits a DCI message to the UE, where the DCI message includes an identifier of the CG group, and the DCI message is used to activate one or more CGs within the data transmission period included in each CG configuration of the CG group.

After receiving the RRC message and the DCI message, the UE may determine the CG group based on the identifier of the CG group carried in the DCI message, and activate, based on the quantity of CGs within one data transmission period included in each CG configuration defined in the CU group (including determining a start time and a radio resource of each CG, etc.), the corresponding quantity of CGs within the data transmission period in which the UE transmits different types of communication frames. For a specific implementation in which the network element activates of CGs for the UE in one data transmission period, refer to the foregoing related description. Details are not described herein.

When transmitting different types of communication frames, the UE may use radio resources with same transmission performance or different transmission performance. Therefore, the network element may provide different CG configurations (the CG configuration 1, the CG configuration 2, and the CG configuration 3) for different types of communication frames (I frames, P frames, and B frames) to be transmitted by the UE, and activate CGs within a data transmission period included in each CG configuration by delivering a plurality of different DCIs.

S703: The UE determines, based on the RRC message and the DCI message, a start time and a radio resource of each CG within the data transmission period included in each CG configuration.

S704: The UE transmits a UCI message to the network element, where the UCI message includes notification information, the notification information is used to notify the network element that a target CG among a plurality of CGs within the data transmission period included in each CG configuration is not used by the UE, or the notification information is used to notify the network element to increase the quantity of CGs within the data transmission period included in each CG configuration.

In this embodiment, the UE may determine, based on the quantity of CGs within the data transmission period included in each CG configuration currently configured for the UE by the network element and transmission performance of the radio resources, whether the UE has a problem of a waste or shortage of resources within the data transmission period included in each CG configuration, to determine, based on a determining result, whether the quantity of currently configured CGs needs to be increased within the data transmission period included in each CG configuration, or whether some configured CGs are canceled from use by the UE, and further transmit corresponding notification information to the network element.

In a possible implementation, the UE may first perform the process of transmitting an I frame, a P frame, and a B frame data respectively in the first data transmission period to the third data transmission period, so as to determine whether to request the network element to switch the CG group based on the performance of the UE in the three data transmission periods.

Specifically, assuming that the network element configures the quantity of CGs within each data transmission period for the UE based on the CG group 1 under initial conditions, if the three data transmission periods all have a problem that radio resources of some CGs are left idle, the UE may transmit notification information before the third data transmission period ends. The notification information is used to notify the network element to perform a CG configuration for the UE based on the CG group 2. Thus, after the network element performs the CG configuration for the UE based on the CG group 2, the UE transmits I frame data to the network element based on radio resources of four CGs in a fourth data transmission period (i.e., a second data transmission period for transmitting the I frame data). The UE transmits P frame data to the network element based on radio resources of two CGs in a fifth data transmission period (i.e., a second data transmission period for transmitting the P frame data). The UE transmits B frame data to the network element based on a radio resource of one CG in a sixth data transmission period (i.e., a second data transmission period for transmitting the B frame data).

As an example, when the CG configuration made by the network element based on the currently selected CG group does not match an actual use demand of the UE, the UE may generate and transmit notification information including an identifier of a target CG group (for example, an identifier of the foregoing CG group 2). The target CG group is a CG group among the plurality of CG groups supported by the network element (which is inconsistent with a CG group currently selected by the network element). Thus, the subsequent network element may perform a corresponding configuration for the UE based on the identifier and a plurality of CG configurations included in the target CG group.

As another example, the notification information transmitted by the UE to the network element may include a bit field or a bitmap, so that the network element may configure one or more CGs within the data transmission period included in each of the plurality of CG configurations of the UE based on values of a plurality of bits included in the bit field or the bitmap. For a method for the network element to configure CGs within a data transmission period included in one CG configuration for the UE based on a bit field or a bitmap, refer to the foregoing related description. Details are not described herein. Therefore, the network element may configure one or more CGs within the data transmission periods included in each CG configuration one by one based on the bit field or the bitmap in a similar manner.

In an actual application, the network element may provide more CG groups based on finer configurations. For example, the network element may further provide a CG group 3: {{CG configuration 1, 4}, {CG configuration 2, 4}, {CG configuration 3, 2} }, and the like, so as to enable finer adjustment on the CG configuration for the UE.

It may be understood that the foregoing description is provided by using an example in which a waste of resources occurs in the data transmission period of the UE. When the UE has a problem of a shortage of radio resources in the first data transmission period to the third data transmission period, the notification information transmitted by the UE to the network element is used to notify the network element to increase the quantity of CGs configured for the UE within the data transmission period included in each CG configuration. For example, the network element may further provide a CG group 4: {{CG configuration 1, 8}, {CG configuration 2, 6}, {CG configuration 3, 4}}, and the like. Therefore, when the network element performs a CG configuration for the UE based on the CG group 1, if a problem of a shortage of radio resources exists, the notification information transmitted by the UE to the network element is used to notify the network element to perform a CG configuration for the UE based on the CG group 4.

S705: The network element delivers a new DCI message to the UE based on the notification information, where the new DCI message includes an identifier of a target CG group and is used to activate each CG within a data transmission period included in each CG configuration included in the target CG group.

Thus, the network element may reconfigure CGs within the data transmission period included in each CG configuration for the UE based on the target CG group.

S706: The UE transmits, within the data transmission period included in each CG configuration, data to the network element based on start times of CGs within the data transmission period by using radio resources of the CGs.

In this way, the UE may perform data exchange with the network element based on the CGs newly determined within each data transmission period, thereby improving rationality of allocating radio resources by the network element.

It should be noted that the communication method shown in FIG. 7 is merely an example illustration. In an actual application, a combination of the various implementation examples described above may be used to achieve fine control over the CG configuration for the UE by the network element. For example, in other possible embodiments, if the network element provides two configurations: {six CGs, four CGs, two CGs} and {four CGs, two CGs, one CG}, the network element may perform a configuration for the UE based on the strategies of {{six CGs, four CGs, two CGs} and {four CGs, two CGs, one CG} }. In this case, the UE has six CGs in the first data transmission period, four CGs in the second data transmission period, two CGs in the third data transmission period, four CGs in the fourth data transmission period, two CGs in the fifth data transmission period, one CG in the sixth data transmission period, six CGs in the seventh data transmission period, and so on.

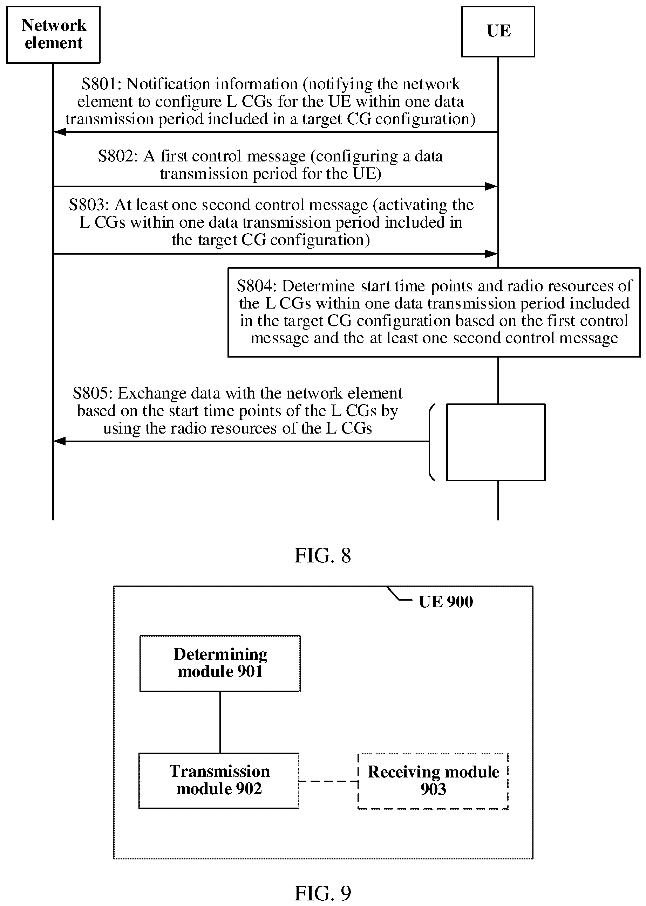

In the embodiments shown in FIG. 4 and FIG. 7, the process in which the UE requests the network element to adjust the CG configuration is mainly described. In other possible embodiments, the UE may directly request a corresponding quantity of CGs (and corresponding radio resources) from the network element based on a need of the UE after establishing a connection to the network element. A process in which the UE instructs the network element to allocate a corresponding quantity of CGs and transmit data to the network element by using the CGs is described in detail below in combination with FIG. 8.

FIG. 8 is a schematic flowchart of another communication method according to an embodiment of this application. As shown in FIG. 8, the method may specifically include the following steps:
S801: A UE establishes a connection to network element, and then transmits notification information to the network element, where the notification information is used to notify the network element to configure L CGs for the UE within one data transmission period included in a target CG configuration, and L is a positive integer.

The network element may provide one or more CG configurations. The UE may notify the network element to configure a specific quantity of CGs within a data transmission period included in one CG configuration, or to configure a specific quantity of CGs within a data transmission period included in one CG configuration among a plurality of CG configurations. For ease of understanding, in this embodiment, an example description is provided by using an example in which the UE notifies the network element to configure CGs within a data transmission period included in a target CG configuration among a plurality of CG configurations.

In this embodiment, the UE may request a corresponding CG configuration from the network element based on a data transmission need between the UE and the network element, so that the UE can complete, within a specific time period, the entire data transmission with the network element by using a radio resource (e.g., a frequency domain resource) corresponding to the CG configuration.

For example, the UE may generate a UAI message including the notification information, and transmit the UAI message to the network element. In the UAI message, a parameter "CG-AssistantceConfig" may be defined, and a value of the parameter "CG-AssistantceConfig" may be used as the notification information.

For example, when the value of the parameter "CG-AssistantceConfig" is 4, i.e., a value of L is 4, it indicates that the network element is to configure four CGs for the UE within one data transmission period included in the target CG configuration. In this case, the UE may transmit data to the network element within each data transmission period by using corresponding radio resources in time periods corresponding to the four CGs.

For another example, when the value of the parameter "CG-AssistantceConfig" is {6, 4, 2}, it indicates that in a first data transmission period included in the target CG configuration, the value of L is 6, in a second data transmission period, the value of L is 4, and in a third data transmission period, a value of L is 2. In this case, the UE may transmit data to the network element in the first data transmission period (and the subsequent fourth data transmission period, etc.) included in the target CG configuration by using corresponding radio resources in time periods corresponding to the six CGs; transmit data to the network element in the second data transmission period (and the subsequent fifth data transmission period, etc.) included in the target CG configuration by using the corresponding radio resources in the time periods corresponding to the four CGs; and transmit data to the network element in the third data transmission period (and the subsequent sixth data transmission period, etc.) included in the target CG configuration by using the corresponding radio resources in the time periods corresponding to the two CGs.

For another example, the value of the parameter "CG-AssistantceConfig" may be used as an identifier of the target CG group, and is used to notify the network element to perform a configuration for the UE based on the target CG. Specifically, the network element may provide two CG groups. A CG group 1 is specifically {{CG configuration 1, 6}, {CG configuration 2, 4}, and {CG configuration 3, 2}}, which indicates that the UE has six CGs within a data transmission period included in the CG Configuration 1 (for transmitting I frame data), four CGs within a data transmission period included in the CG configuration 2 (for transmitting P frame data), and two CGs within a data transmission period included in the CG configuration 3 (for transmitting B frame data). A CG group 2 is specifically {{CG configuration 1, 4}, {CG configuration 2, 2}, and {CG configuration 3, 1}}. Assuming the value of the parameter "CG-AssistantceConfig" is 2, the UE may notify, by using the value of the parameter "CG-AssistantceConfig" the network element to perform a configuration for the UE based on the CG group 2 (i.e., the foregoing target CG group). In this embodiment, the target CG configuration is a CG configuration among a plurality of CG configurations included in the target CG group.

S802: The network element transmits a first control message to the UE based on the notification information, where the first control message is used to configure a data transmission period for the UE.

For example, the first control message may be an RRC message.

The RRC message may carry a parameter used to indicate a data transmission period. In this way, the UE may determine a duration of the data transmission period based on the parameter in the RRC message.

S803: The network element transmits at least one second control message to the UE, where the at least one second control message is used to activate L CGs within one data transmission period included in the target CG configuration.

Specifically, the network element may deliver one second control message to the UE, and implements, based on the second control message, activation of the L CGs for the UE within one data transmission period included in the target CG configuration, i.e., activation of radio resources of the L CGs. For example, the UE may calculate a start time of a first CG within the data transmission period included in the target CG configuration based on one second control message, and then determine a time period corresponding to the first CG based on the start time and a duration indicated in the second control message. Then the UE calculates a start time of the second CG based on a time interval between different CGs, and so on, until a start time of an L^{th} CG is determined. Moreover, the UE may determine a radio resource corresponding to each CG based on frequency domain resource information carried in the second control message. radio resources corresponding to different CGs are the same.

Alternatively, the network element may deliver a plurality of second control messages to the UE, and achieve, based on the plurality of second control messages, the activation of L CGs for the UE within one data transmission period included in the target CG configuration. For example, the UE may calculate a start time of a time period corresponding to a first CG within the data transmission period based on the received first second control message, and determine a radio resource of the first CG based on frequency domain resource information carried in a second control message. Similarly, the UE may calculate a start time of a second CG based on a received second control message, and so on, until a start time of the L^{th} CG is calculated based on an L^{th} second control message.

S804: The UE determines start times and radio resources of the L CGs within one data transmission period included in the target CG configuration based on the first control message and the at least one second control message.

S805: The UE exchanges data with the network element based on the start times respectively corresponding to the L CGs by using the radio resources respectively corresponding to the L CGs.

Since the CGs allocated to the UE by the network element are activated, that is, the radio resource in each CG is activated, the UE may transmit data to the network element within the corresponding time period by using the activated radio resource. Specifically, the UE may start transmitting data to the network element at the start time of the first CG by using the radio resource of the first CG, and stop transmitting the data at an end time of the first CG. Then, when the start time of the second CG arrives, the UE starts transmitting data to the network element by using the radio resource of the second CG, until an end time of the second CG arrives. Similarly, the UE transmits data to the network element by using the radio resources of the L CGs in the time periods respectively corresponding to the L CGs.

It is worth noting that, in the embodiment shown in FIG. 8, an example in which the UE transmits the notification information corresponding to the target CG configuration to the network element is used. When the network element provides a plurality of CG configurations, the UE may separately transmit notification information for each CG configuration, or may transmit a single piece of notification information which may be used to notify the network element to configure a specific quantity of CGs within the data transmission period included in each CG configuration. For example, the UE may transmit notification information including { {CG configuration id, CG quantity}, ..., {CG configuration id, CG quantity}} to the network element. Therefore, the network element may configure, based on a quantity CG quantity corresponding to each CG configuration, the corresponding quantity of CGs within the data transmission period included in each CG configuration for the UE. For example, assuming that the network element may provide three CG configurations to the UE, namely, a CG configuration 1, a CG configuration 2, and a CG configuration 3, the UE may transmit notification information including { {CG configuration 1, Num1}, {CG configuration 2, Num2}, and {CG configuration 3, Num3}} to the network element. Therefore, the network element may configure, based on the notification information, a quantity of CGs within a data transmission period included in the CG configuration 1 as Num1, a quantity of CGs within a data transmission period included in the CG configuration 2 as Num2, and a quantity of CGs within a data transmission period included in the CG configuration 3 as Num3. For a specific implementation process in which the network element configures the quantity of CGs within the data transmission period included in each CG configuration, refer to the foregoing related description of the configuration of CGs within the data transmission period included in the target CG configuration. Details are not described herein.

In the embodiments shown in FIG. 4 to FIG. 8, the process in which the UE notifies the network element of usage of the CGs within the data transmission period included in one or more CG configurations is mainly described. In other possible embodiments, the network element may notify the UE of related information of a plurality of CDAs within a data transmission period included in one or more SPS configurations.

In an actual implementation, the network element may be configured to determine related information of N CDAs within one data transmission period included in a target SPS configuration configured for the UE. The related information of the N CDAs includes start times respectively corresponding to the N CDAs and radio resources respectively corresponding to the N CDAs, where N is a positive integer. Then, the network element may transmit notification information to the UE based on the related information of the N CDAs. The notification information is used to notify the UE that a target CDA among the N CDAs within the data transmission period included in the target SPS configuration is not scheduled for use by the UE.

The UE may skip detecting data transmitted by the network element on a radio resource of the target CDA.

Optionally, the network element may dynamically schedule the radio resource of the target CDA for use by other UEs.

For example, when the network element delivers the notification information to the UE, the network element may specifically deliver a MAC-CE message or a DCI message that includes the notification information. In an actual application, the message may be a message of other types. This is not limited in this embodiment.

The communication method between the network element and the UE is described in the foregoing embodiments in combination with FIG. 3 to FIG. 8. Structures of the network element and the UE are described below by using examples.

FIG. 9 is a schematic structural diagram of a user equipment UE 900. The UE 900 includes:
a determining module 901, configured to determine related information of N configured grants CGs within one data transmission period configured for the UE, where the related information of the N CGs includes start times respectively corresponding to the N CGs and radio resources respectively corresponding to the N CGs, and N is a positive integer; and
a transmission module 902, configured to transmit notification information to a network element based on the related information of the N CGs, where the notification information is used to notify the network element that a target CG among the N CGs within one data transmission period included in a target CG configuration is not used by the UE, or the communication message is used to notify the network element to increase a quantity of CGs within one data transmission period included in the target CG configuration.

In a possible implementation, the UE 900 further includes:
a receiving module 903, configured to receive a control message transmitted by the network element, where the control message is used to adjust the N CGs within one data transmission period included in the target CG configuration to M CGs, and M is a positive integer different from N.

The transmission module 902 is configured to perform, based on start times respectively corresponding to the M CGs, data exchange by using radio resources respectively corresponding to the M CGs.

In a possible implementation, the notification information includes a bit field, and a value of the bit field is used to indicate that the target CGs among the N CGs within one data transmission period included in the target CG configuration are not used by the UE, or the value of the bit field is used to instruct the network element to increase the quantity of CGs within one data transmission period included in the target CG configuration.

In a possible implementation, the notification information is used to notify the network element that the target CGs among the N CGs within one data transmission period included in the target CG configuration are not used by the UE, the notification information includes a cancel operation and an identifier of the target CG, the cancel operation is used to indicate that the UE cancels use of the CG, and the identifier is used to indicate the target CG canceled from use by the UE.

In a possible implementation, the notification information includes a bitmap, and a value of the bitmap is used to indicate the target CG canceled from use by the UE.

In a possible implementation, the notification information includes a bitmap, when a value of a first-part bit in the bitmap is a first value, the first-part bit is used to indicate the cancel operation, and a value of a second-part bit in the bitmap is used to indicate the target CG canceled from use by the UE.

In a possible implementation, when the value of the first-part bit in the bitmap is a second value, the first-part bit is used to indicate an increase operation, the increase operation is used to instruct to increase CGs within one data transmission period included in the target CG configuration, and the value of the second-part bit in the bitmap is used to indicate a quantity of added CGs.

In a possible implementation, the notification information includes a quantity M, M is used to indicate the quantity of CGs within one data transmission period included in the target CG configuration, and M is a positive integer.

In a possible embodiment, the notification information includes a target field, and the target field is used to identify the target CG configuration.

In a possible embodiment, the UE transmits the notification information based on a first CG, and the target CG configuration is a CG configuration in which the first CG is located.

In a possible implementation, the notification information is used to notify the network element to increase the quantity of CGs within one data transmission period included in the target CG configuration.

The UE 900 further includes:
a receiving module 903, configured to receive a downlink control information DCI message transmitted by the network element, where the DCI message is used to configure a dynamic grant DG within the data transmission period, and a data transmission amount of the UE supported by the DG matches a data transmission amount of the UE supported by a quantity of CGs to be added as indicated by the notification information.

The transmission module 902 is further configured to perform, based on start times respectively corresponding to the N CGs and a start time of the DG, data exchange with the network element by using radio resources respectively corresponding to the N CGs and a radio resource of the DG.

In a possible implementation, the notification information is used to notify the network element to adjust a quantity of CGs within one data transmission period included in each of a plurality of CG configurations, and the plurality of CG configurations include the target CG configuration.

In a possible implementation, the notification information includes a bit field or a bitmap, and a value of the bit field or a value of the bitmap is used to instruct the network element to adjust the quantity of CGs within one data transmission period included in each of the plurality of CG configurations.

In a possible implementation, a first field in the bit field or the bitmap is used to identify each CG configuration among the plurality of CG configurations, and a second field in the bit field or the bitmap is used to indicate the quantity of CGs within one data transmission period included in each of the plurality of CG configurations.

In a possible implementation, the notification information includes an identifier of a target CG group, the target CG group is a CG group among a plurality of CG groups, each CG group among the plurality of CG groups includes the plurality of CG configurations, and the notification information is used to notify the network element to configure the quantity of CGs within one data transmission period included in each of the plurality of CG configurations based on the target CG group.

In a possible implementation, the notification information is used to notify the network element that the target CG among the N CGs within one data transmission period included in the target CG configuration is not used by the UE.

The transmission module 902 is specifically configured to transmit the notification information to the network element at a target time, where
the target time is any time within a time period corresponding to the first CG among the N CGs; or the target time is any time within a time period corresponding to m CGs before the first CG among the target CG, and m is a positive integer greater than or equal to 1; or a time interval between the target time and a start time of the first CG among the target CG is greater than a preset duration.

In a possible implementation, the transmission module 902 is specifically configured to:
transmit uplink control information UCI to the network element, where the UCI includes the notification information; or
transmit a media access control layer control element MAC-CE message to the network element, where the MAC-CE message includes the notification information; or
transmit user equipment assistance information UAI to the network element, where the UAI includes the notification information.

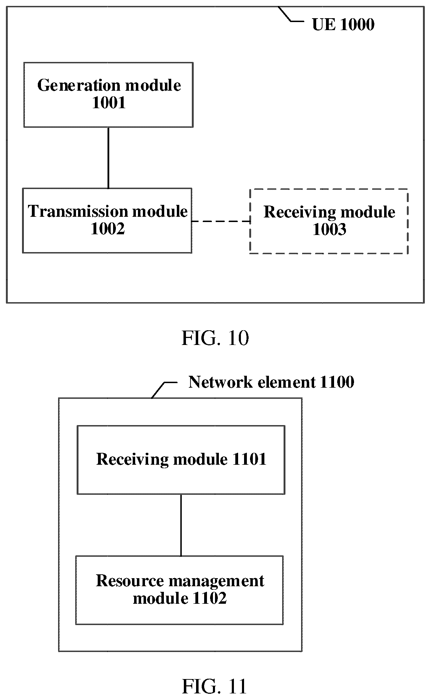

FIG. 10 is a schematic structural diagram of a user equipment UE 1000. The UE 1000 includes:
a generation module 1001, configured to generate notification information, where the notification information is used to notify a network element to configure L CGs for the UE within one data transmission period included in a target configured grant CG configuration, and L is a positive integer; and
a transmission module 1002, configured to transmit the notification information.

In a possible implementation, the UE 1000 further includes:
a receiving module 1003, configured to: receive a first control message transmitted by the network element, where the first control message is used to configure a data transmission period of the UE, and to receive at least one second control message transmitted by the network element, where the second control message is used to activate the L CGs within one data transmission period included in the target CG configuration.

The transmission module 1001 is further configured to perform, based on start times respectively corresponding to the L CGs, data exchange by using radio resources respectively corresponding to the L CGs.

In a possible implementation, the notification information is used to notify the network element to configure a quantity of CGs for the UE within one data transmission period included in each of a plurality of CG configurations, where the plurality of CG configurations include a target CG configuration.

In a possible implementation, the notification information includes an identifier of a target CG group, the target CG group is a CG group among a plurality of CG groups, each CG group among the plurality of CG groups includes a plurality of CG configurations, and the plurality of CG configurations include the target CG configuration; and
the notification information is used to notify the network element to configure the quantity of CGs within one data transmission period included in each of the plurality of CG configurations based on the target CG group.

In a possible implementation, the transmission module 1001 is specifically configured to transmit user equipment assistance information UAI to the network element, where the UAI includes the notification information.

FIG. 11 is a schematic structural diagram of a network element 1100. The network element 1100 includes:
a receiving module 1101, configured to receive notification information, where the notification information is used to notify the network element that a target CG among N CGs within one data transmission period included in a target CG configuration is not used by a UE, or the notification information is used to notify the network element to increase a quantity of CGs within one data transmission period included in the target CG configuration; and
a resource management module 1102, configured to manage a radio resource of the target CG based on the notification information, or configure a resource for the UE based on the notification information.

In a possible implementation, the resource management module 1102 is specifically configured to transmit a control message to the UE, where the control message is used to adjust N CGs within one data transmission period included in the target CG configuration to M CGs, N is a positive integer, and M is a positive integer different from N.

In a possible implementation, the resource management module 1102 is specifically configured to dynamically schedule the radio resource of the target CG to other UEs.

In a possible implementation, the communication message is used to notify the network element to increase the quantity of CGs within one data transmission period included in the target CG configuration.

The resource management module 1102 is specifically configured to transmit a downlink control information DCI message to the UE, where the DCI message is used to configure a dynamic grant DG within the data transmission period, and a data transmission amount of the UE supported by the DG matches a data transmission amount of the UE supported by a quantity of CGs to be added as indicated by the notification information.

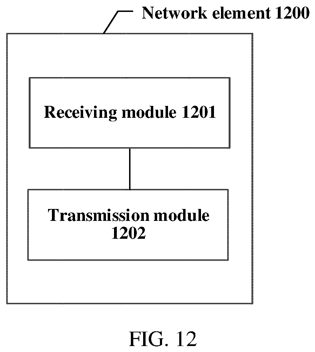

FIG. 12 is a schematic structural diagram of a network element 1200. The network element 1200 includes:
a receiving module 1201, configured to receive notification information, where the notification information is used to notify the network element to configure L CGs for a UE within one data transmission period included in a target configured grant CG configuration, and L is a positive integer; and
a transmission module 1202, configured to: transmit a first control message to the UE, where the first control message is used to configure the data transmission period of the UE, and transmit at least one second control message, where the at least one second control message is used to activate the L CGs within one data transmission period included in the target CG configuration.

The receiving module 1201 is further configured to receive data transmitted based on start times respectively corresponding to the L CGs by using radio resources respectively corresponding to the L CGs.

In addition, an embodiment of this application further provides a computer-readable storage medium. The computer-readable storage medium stores instructions that, when run on one or more computing devices, cause the one or more computing devices to perform the communication method described in the foregoing embodiments.

Further, an embodiment of this application further provides a computer program product. When the computer program product is executed by one or more computing devices, the one or more computing devices perform any method in the foregoing communication method. The computer program product may be a software installation package. When any of the foregoing communication methods needs to be used, the computer program product may be downloaded and executed on a computer.

In addition, it should be noted that the described apparatus embodiments are merely examples. The units described as separate components may or may not be physically separate, and components displayed as units may or may not be physical units, that is, may be located in one position, or may be distributed on a plurality of network units. Some or all of the modules may be selected according to actual needs to achieve the objectives of the solutions of the embodiments. In addition, in the drawings of the apparatus embodiments provided by this application, connection relationships between the modules indicate that the modules have communication connections with each other, which may be specifically implemented as one or more communication buses or signal lines.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that may be performed by a computer program can be easily implemented by using corresponding hardware. Moreover, a specific hardware structure used to achieve the same function may be of various forms, for example, an analog circuit, a digital circuit, or a dedicated circuit. However, as for this application, a software program implementation is a better implementation in most cases. Based on such an understanding, the technical solutions of this application, in essence or a part contributing to the prior art, may be implemented in a form of a software product. The computer software product is stored in a readable storage medium, such as a floppy disk, a USB flash drive, a removable hard disk, a ROM, a RAM, a magnetic disk, or an optical disc of a computer, and includes instructions for instructing a computer device (which may include a personal computer, a training device, a network device, or the like) to perform the methods described in embodiments of this application.

All or some of the foregoing embodiments may be implemented by using software, hardware, firmware, or any combination thereof. When embodiments are implemented by using software, all or some of the embodiments may be implemented in a form of a computer program product.

The computer program product includes one or more computer instructions. When the computer program instructions are loaded and executed on a computer, all or some of the processes or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, another computer, another training device, or another data center in a wired manner (for example, through a coaxial cable, an optical fiber, or a digital subscriber line (DSL)) or a wireless manner (for example, infrared, radio, or microwave manner). The computer-readable storage medium may be any usable medium that can be stored by the computer, or may be a data storage device, such as a server or a data center in which one or more usable media are integrated. The usable medium may be a magnetic medium (such as a soft disk, a hard disk, or a magnetic tape), an optical medium (such as a DVD), a semiconductor medium (such as a solid state disk (solid state disk, SSD)), or the like.

## Claims

1. A communication method, applied to a user equipment UE, the method comprising:
determining related information of N CGs within one data transmission period comprised in a target configured grant CG configuration configured for the UE, wherein the related information of the N CGs comprises start times respectively corresponding to the N CGs and radio resources respectively corresponding to the N CGs, and N is a positive integer; and
transmitting notification information based on the related information of the N CGs, wherein the notification information is used to notify the network element that a target CG among the N CGs within one data transmission period comprised in the target CG configuration is not used by the UE, or the notification information is used to notify the network element to increase a quantity of CGs within one data transmission period comprised in the target CG configuration.

2. The method according to claim 1, further comprising:
receiving a control message, wherein the control message is used to adjust the N CGs within one data transmission period comprised in the target CG configuration to M CGs, and M is a positive integer different from N; and
performing, based on start times respectively corresponding to the M CGs, data exchange by using radio resources respectively corresponding to the M CGs.

3. The method according to claim 1 or 2, wherein the notification information comprises a bit field, and a value of the bit field is used to indicate that the target CG among the N CGs within one data transmission period comprised in the target CG configuration is not used by the UE, or the value of the bit field is used to instruct the network element to increase the quantity of CGs within one data transmission period comprised in the target CG configuration.

4. The method according to claim 1, wherein the notification information is used to notify the network element that the target CG among the N CGs within one data transmission period comprised in the target CG configuration is not used by the UE, the notification information comprises a cancel operation and an identifier of the target CG, the cancel operation is used to indicate that the UE cancels use of the CG, and the identifier is used to indicate the target CG canceled from use by the UE.

5. The method according to claim 4, wherein the notification information comprises a bitmap, and a value of the bitmap is used to indicate the target CG canceled from use by the UE.

6. The method according to claim 4, wherein the notification information comprises a bitmap, when a value of a first-part bit in the bitmap is a first value, the first-part bit is used to indicate the cancel operation, and a value of a second-part bit in the bitmap is used to indicate the target CG canceled from use by the UE.

7. The method according to claim 6, wherein when the value of the first-part bit in the bitmap is a second value, the first-part bit is used to indicate an increase operation, the increase operation is used to instruct to increase CGs within one data transmission period comprised in the target CG configuration, and the value of the second-part bit in the bitmap is used to indicate a quantity of increased CGs.

8. The method according to claim 1, wherein the notification information comprises a quantity M, M is used to indicate the quantity of CGs within one data transmission period comprised in the target CG configuration, and M is a positive integer.

9. The method according to any one of claims 1 to 8, wherein the notification information comprises a target field, and the target field is used to identify the target CG configuration.

10. The method according to any one of claims 1 to 8, wherein the UE transmits the notification information based on a first CG, and the target CG configuration is a CG configuration in which the first CG is located.

11. The method according to claim 1, wherein the notification information is used to notify the network element to increase the quantity of CGs within one data transmission period comprised in the target CG configuration, and the method further comprises:
receiving a downlink control information DCI message, wherein the DCI message is used to configure a dynamic grant DG within the data transmission period, and a data transmission amount of the UE supported by the DG matches a data transmission amount of the UE supported by a quantity of CGs to be added as indicated by the notification information; and
performing, based on start times respectively corresponding to the N CGs and a start time of the DG, data exchange by using radio resources respectively corresponding to the N CGs and a radio resource of the DG.

12. The method according to any one of claims 1 to 11, wherein the notification information is used to notify the network element to adjust a quantity of CGs within one data transmission period comprised in each of a plurality of CG configurations, and the plurality of CG configurations comprise the target CG configuration.

13. The method according to claim 12, wherein the notification information comprises a bit field or a bitmap, and a value of the bit field or a value of the bitmap is used to instruct the network element to adjust the quantity of CGs within one data transmission period comprised in each of the plurality of CG configurations.

14. The method according to claim 13, wherein a first field in the bit field or the bitmap is used to identify each CG configuration among the plurality of CG configurations, and a second field in the bit field or the bitmap is used to indicate the quantity of CGs within one data transmission period comprised in each of the plurality of CG configurations.

15. The method according to claim 12, wherein the notification information comprises an identifier of a target CG group, the target CG group is a CG group among a plurality of CG groups, each CG group among the plurality of CG groups comprises the plurality of CG configurations, and the notification information is used to notify the network element to configure the quantity of CGs within one data transmission period comprised in each of the plurality of CG configurations based on the target CG group.

16. The method according to any one of claims 1 to 15, wherein the notification information is used to notify the network element that the target CG among the N CGs within one data transmission period comprised in the target CG configuration is not used by the UE; and
the transmitting notification information comprises:
transmitting the notification information at a target time, wherein
the target time is any time within a time period corresponding to the first CG among the N CGs; or the target time is any time within a time period corresponding to m CGs before the first CG among the target CG, and m is a positive integer greater than or equal to 1; or a time interval between the target time and a start time of the first CG among the target CG is greater than a preset duration.

17. The method according to any one of claims 1 to 16, wherein the transmitting notification information comprises:
transmitting uplink control information UCI, wherein the UCI comprises the notification information; or
transmitting a media access control layer control element MAC-CE message, wherein the MAC-CE message comprises the notification information; or
transmitting user equipment assistance information UAI, wherein the UAI comprises the notification information.

18. A communication method, applied to a user equipment UE, the method comprising:
generating notification information, wherein the notification information is used to notify a network element to configure L CGs for the UE within one data transmission period comprised in a target configured grant CG configuration, and L is a positive integer; and
transmitting the notification information.

19. The method according to claim 18, further comprising:
receiving a first control message, wherein the first control message is used to configure a data transmission period of the UE;
receiving at least one second control message, wherein the second control message is used to activate the L CGs within one data transmission period comprised in the target CG configuration; and
performing, based on start times respectively corresponding to the L CGs, data exchange by using radio resources respectively corresponding to the L CGs.

20. The method according to claim 18 or 19, wherein the notification information is used to notify the network element to configure a quantity of CGs for the UE within one data transmission period comprised in each of a plurality of CG configurations, and the plurality of CG configurations comprise the target CG configuration.

21. The method according to claim 18 or 19, wherein the notification information comprises an identifier of a target CG group, the target CG group is a CG group among a plurality of CG groups, each CG group among the plurality of CG groups comprises a plurality of CG configurations, and the plurality of CG configurations comprise the target CG configuration; and
the notification information is used to notify the network element to configure the quantity of CGs within one data transmission period comprised in each of the plurality of CG configurations based on the target CG group.

22. The method according to any one of claims 18 to 21, wherein the transmitting notification information comprises:
transmitting user equipment assistance information UAI, wherein the UAI comprises the notification information.

23. A communication method, applied to a network element, the method comprising:
receiving notification information, wherein the notification information is used to notify the network element that a target CG among a plurality of CGs within one data transmission period comprised in a target CG configuration is not used by a user equipment UE, or the communication message is used to notify the network element to increase a quantity of CGs within one data transmission period comprised in the target CG configuration; and
managing a radio resource of the target CG based on the notification information, or configuring a resource for the UE based on the notification information.

24. The communication method according to claim 23, wherein the configuring a resource for the UE based on the notification information comprises:
transmitting a control message, wherein the control message is used to adjust N CGs within one data transmission period comprised in the target CG configuration to M CGs, N is a positive integer, and M is a positive integer different from N.

25. The method according to claim 23, wherein the configuring a resource for the UE based on the notification information comprises:
dynamically scheduling the radio resource of the target CG to other UEs.

26. The method according to claim 23, wherein the communication message is used to notify the network element to increase the quantity of CGs within one data transmission period comprised in the target CG configuration; and
the configuring a resource for the UE based on the notification information comprises:
transmitting a downlink control information DCI message, wherein the DCI message is used to configure a dynamic grant DG within the data transmission period, and a data transmission amount of the UE supported by the DG matches a data transmission amount of the UE supported by a quantity of CGs to be added as indicated by the notification information.

27. A communication method, applied to a network element, the method comprising:
receiving notification information, wherein the notification information is used to notify the network element to configure L CGs for a user equipment UE within one data transmission period comprised in a target configured grant CG configuration, and L is a positive integer;
transmitting a first control message, wherein the first control message is used to configure a data transmission period of the UE;
transmitting at least one second control message, wherein the at least one second control message is used to activate the L CGs within one data transmission period comprised in the target CG configuration; and
receiving data transmitted based on start times respectively corresponding to the L CGs by using radio resources respectively corresponding to the L CGs, wherein the start times respectively corresponding to the L CGs and the radio resources respectively corresponding to the L CGs are determined based on the first control message and the at least one second control message.

28. An electronic device, comprising:
a memory and at least one processor, wherein
the memory is configured to store a program; and
the at least one processor is configured to run the program, so that the electronic device implements the communication method according to any one of claims 1 to 17, the communication method according to any one of claims 18 to 22, the communication method according to any one of claims 23 to 26, or the communication method according to claim 27.

29. A computer storage medium, configured to store a computer program, wherein the computer program, when executed, is configured to implement the communication method according to any one of claims 1 to 17, the communication method according to any one of claims 18 to 22, the communication method according to any one of claims 23 to 26, or the communication method according to claim 27.
